# EUROPEAN PATENT APPLICATION

(11) **EP 4 478 434 A1**
(43) Date of publication of application: **18.12.2024**
(21) Application number: 24175945.5
(22) Date of filing: 15.05.2024
(51) Int. Cl.: H01M 4/04, C01B 32/20, C01B 33/00, C09C 1/46, C01G 53/00, H01M 4/38, H01M 4/587, H01M 4/36, H01M 10/0525, H01M 4/02

(54) **SILICON CARBON COMPOSITE ANODE MATERIALS, PREPARATION METHOD THEREOF, AND SECONDARY BATTERY COMPRISING THE SAME**

(30) Priority: 15.05.2023 KR 20230062573; 29.08.2023 KR 20230113832; 16.10.2023 KR 20230138050; 20.11.2023 KR 20230160195
(71) Applicant: Lemon Energy Inc., Incheon 22825 (KR)
(72) Inventor: Lee, Si Hyun, 22825 Incheon (KR); Lee, Jin Suk, 22825 Incheon (KR); Ahn, Yu Jeong, 22825 Incheon (KR)
(74) Representative: Grünecker Patent- und Rechtsanwälte PartG mbB

(57) **Abstract**

Disclosed are a silicon carbon composite anode material, a method of preparing the same, and a secondary battery including the same. In one embodiment, the anode material includes: a hollow core having a hollow portion therein; one or more hard coating layers spaced apart from each other in an outward direction from the hollow core; nano-silicon particles packed in the hollow portion and in a separation space defined between the hard coating layers; and a soft coating layer formed on an outer circumferential surface of an outermost hard coating layer, wherein each of the hollow core and the hard coating layers has a higher hardness than the soft coating layer, and the anode material has a hardness sequentially increasing from the hollow core to the outermost hard coating layer.

## Description

### Cross-Reference to Related Application

This application claims the benefit of Korean Patent Application No. 10-2023-0062573, filed on May 15, 2023, No. 10-2023-0113832, filed on August 29, 2023, No. 10-2023-0138050 filed on October 16, 2023, and No. 10-2023-0160195 filed on November 20, 2023 in the Korean Intellectual Property Office, the entire disclosures of which are incorporated herein by reference.

### Field of the Invention

The present invention relates to a silicon carbon composite anode material, a preparation method thereof, and a secondary battery including the same.

### Description of the Related Art

Currently, generation of greenhouse gas including carbon dioxide and the like and global temperature rise due to the use of fossil energy are of serious concern. Regulation on emission of carbon dioxide is strengthened in countries around the world and introduction of electric vehicles using electricity as a power source is rapidly increasing to replace internal combustion vehicles driven by fossil fuels as a power source.

Secondary batteries are essential parts of electric vehicles to supply electricity thereto and can be repeatedly used through recharging, unlike primary batteries used once and discarded. In addition to electric vehicles, secondary batteries are used in various fields, such as notebook PCs, mobile devices, vertical take-off/landing aircraft used for Urban Air Mobility (UAM), and electric storage systems. In recent years, demand for high-capacity, low-weight and high-efficiency secondary batteries has increased with industrial development, and research and development of such secondary batteries have been actively conducted.

Representative secondary batteries include lead storage batteries, nickel-cadmium batteries, and lithium ion secondary batteries. Among these secondary batteries, the lithium secondary batteries generate electrical energy through intercalation and deintercalation of lithium ions (Li+) during charging/discharging, and have lightweight and high energy density to be used in various fields, such as electric vehicles and the like.

The lithium secondary battery includes a cathode; an anode; an electrolyte disposed between the cathode and the anode; and a separator embedded in the electrolyte, in which each of the cathode and the anode includes active materials on a current collector. In the lithium secondary battery, a cathode material includes a lithium transition metal oxide and determines capacity and average voltage of the lithium ion battery as a lithium ion source, and an anode material stores and releases lithium ions emitted from the cathode to allow electric current to flow through an external circuit. The electrolyte acts as a medium for movement of lithium ions between the cathode and the anode inside the secondary battery.

In a typical lithium ion battery, crystalline carbon materials or amorphous carbon materials, such as natural graphite and artificial graphite, are used as the anode materials.

In recent years, silicon (Si) has attracted attention as an anode material instead of carbon. Since graphite used as the anode material in the art can store 1 lithium ion per 6 carbon atoms, whereas silicon (Si) can store 4.4 lithium ions per atom, silicon has advantages of a higher energy density than graphite, a theory capacity of about 4,200 mAh/g, and a very fast discharge rate.

However, a silicon anode material has a problem of low structural stability. In the lithium ion battery, the anode material undergoes anode volume expansion (lithiation) in the course of storing lithium ions. That is, graphite allows a volume expansion of about 10% to 20%, whereas silicon (Si) allows a large volume expansion of 4 to 5 times through reaction of 4.4 lithium ions per silicon to form Li₂₂Si₅ alloys. In particular, the silicon anode material has high crystal brittleness and thus can suffer from pulverization (particle cracking, fracture) and electrical separation from the current collector (Cu electrode plate) during repeated charging/discharging of the lithium ion battery, causing rapid capacity decay and decrease in lifespan of the lithium ion battery. Therefore, there is a need for preparation of an anode material to prevent fracture of the anode material due to such volume expansion of silicon.

In order to prevent fracture of the anode material due to such volume expansion of silicon, there is a need for size optimization of the anode material and for suitable control of the number of silicon particles contained in the anode material.

In addition, the silicon anode material has a problem of rapid deterioration in efficiency due to change in an interface state between the anode material (anode active material), the electrolyte, and the electrode. This is caused by generation of numerous lithium traps when silicon particles are broken due to expansion of the anode material during charging of the secondary battery. More specifically, since a solid electrolyte interphase (SEI) layer can be easily broken by mechanical stress during expansion of the silicon particles, a large amount of the SEI layer is formed on outer circumferential surfaces of the silicon particles when destruction and regeneration of the SEI layer is repeated during charging/discharging of the secondary battery, thereby causing a lithium trap phenomenon and deterioration in electrical contact between the silicon particles through increase in distance between the silicon particles. The SEI layer is a protective film formed on an outer circumferential surface of the active material upon reaction of the electrolyte with the active material of the electrode and has high lithium ion conductivity despite low electron mobility, thereby providing a passage through which lithium ions move between the electrolyte and the anode material. Since graphite allows a small volume change, there is no problem with the SEI layer. However, since silicon expands to the extent of destroying the SEI layer during charging of the secondary battery, lithium is consumed by lithiation of the silicon particles and a gas is generated. As a result, the SEI layer gradually hardens and becomes thicker, preventing lithium ions from having access to the electrode and causing reduction in battery life through restriction of oxidation-reduction reaction of lithium.

Therefore, studies are being actively conducted to prevent fracture of the anode material during charging/discharging of the secondary battery through improvement in structural stability of the silicon anode material.

In addition, there is a need for size optimization of the anode material to prevent fracture of the anode material and reduction in capacity thereof due to expansion of silicon upon charging/discharging, and studies are being conducted to suitably control the number of silicon particles contained in the anode material.

Further, studies are being conducted to prevent fracture of the anode material and reduction in capacity thereof due to volume expansion of silicon upon charging/discharging.

The background technique of the present invention is disclosed in Korean Patent Registration No. 10-2185490 (Publication date: December 2, 2020, Title of Invention: Negative active material comprising silicon composite oxide for non-aqueous electrolyte secondary battery and manufacturing method of the same).

### Summary of the Invention

It is one object of the present invention to provide a silicon carbon composite anode material that has good durability and structural stability.

It is another object of the present invention to provide a silicon carbon composite anode material that can prevent fracture of the anode material and deterioration in energy capacity thereof through minimization of volume expansion of silicon particles due to intercalation of lithium ions during charging/discharging of a secondary battery.

It is a further object of the present invention to provide a silicon carbon composite anode material that exhibits good properties in terms of electrical properties, high capacity, high output, long lifespan, reversibility, and initial efficiency.

It is yet another object of the present invention to provide a silicon carbon composite anode material that can be contained in high content in fabrication of an anode for secondary batteries.

It is yet another object of the present invention to provide a silicon carbon composite anode material that has good productivity and economic feasibility.

It is yet another object of the present invention to provide a method of preparing the silicon carbon composite anode material.

It is yet another object of the present invention to provide a secondary battery including the silicon carbon composite anode material.

One aspect of the present invention relates to a silicon carbon composite anode material.
1. The silicon carbon composite anode material includes: a hollow core having a hollow portion therein; one or more hard coating layers spaced apart from each other in an outward direction from the hollow core; nano-silicon particles packed in the hollow portion and in a separation space defined between the hard coating layers; and a soft coating layer formed on an outer circumferential surface of an outermost hard coating layer, wherein each of the hollow core and the hard coating layers has a higher hardness than the soft coating layer, and the anode material has a hardness sequentially increasing from the hollow core to the outermost hard coating layer.
2. In embodiment 1, the hollow core may have a pencil hardness of 4H to 6H, each of the hard coating layers may have a pencil hardness of greater than 4H to 7H, and the soft coating layer may have a pencil hardness of less than 3H, as measured in accordance with ISO 15184.
3. In embodiments 1 to 2, the hollow core may have a thickness of 5 nm to 150 nm and a density of 1.8 g/cm³ to 2.5 g/cm³, each of the hard coating layers may have a thickness of 5 nm to 100 nm and a density of 1.8 g/cm³ to 2.8 g/cm³, and the soft coating layer may have a thickness of 10 nm to 150 nm and a density of 1.5 g/cm³ or less.
4. In embodiments 1 to 3, the anode material may have an average particle diameter (d50) of 5 µm to 30 µm, the hollow portion may have an average diameter of 3 µm to 10 µm, and the nano-silicon particles may have an average particle diameter (d50) of 50 nm to 500 nm.
5. In embodiments 1 to 4, the anode material may include 25 wt% to 80 wt% of the nano-silicon particles, 1 wt% to 40 wt% of the hollow core, 1 wt% to 70 wt% of the hard coating layers, and 1 wt% to 40 wt% of the soft coating layer.
6. In embodiments 1 to 5, the anode material may include the hollow core, the soft coating layer and the hard coating layers in a weight ratio of 1:0.1 to 5:0.1 to 15.
7. In embodiments 1 to 6, the nano-silicon particles may have an effective peak at a diffraction angle (2θ) in the range of 26° to 30°, 47° to 50°, 53° to 58°, 68° to 72°, 74° to 78°, and/or 88° to 90° in the X-ray diffraction (XRD) spectrum.
8. In embodiments 1 to 7, the anode material may further include a medium coating layer formed on an outer circumferential surface of the soft coating layer.
   Another aspect of the present invention relates to a method of preparing the silicon carbon composite anode material.
9. The method of preparing the silicon carbon composite anode material includes: preparing dried powder by drying a mixed slurry including a nano-silicon slurry and a first hard coating material; preparing a first mixture including the dried powder and a second hard coating material; sintering the first mixture to prepare sintered powder; preparing a second mixture including the sintered powder and a soft coating material; and sintering the second mixture to prepare a first intermediate material, wherein the first intermediate material includes a hollow core having a hollow portion therein; one or more hard coating layers spaced apart from each other in an outward direction from the hollow core; nano-silicon particles packed in the hollow portion and in a separation space defined between the hard coating layers; and a soft coating layer formed on an outer circumferential surface of an outermost hard coating layer, wherein each of the hollow core and the hard coating layers has a higher hardness than the soft coating layer, and wherein the anode material has a hardness sequentially increasing from the hollow core to the outermost hard coating layer.
10. In embodiment 9, the nano-silicon slurry may be prepared by dispersing silicon powder and a dispersant in a first solvent to prepare a dispersion, followed by grinding the dispersion, and the first solvent may include at least one of water, ethanol, isopropyl alcohol, and potassium hydroxide (KOH).
11. In embodiments 9 to 10, the hollow core may have a pencil hardness of 4H to 6H, each of the hard coating layers may have a pencil hardness of greater than 4H to 7H, and the soft coating layer may have a pencil hardness of less than 3H, as measured in accordance with ISO 15184.
12. In embodiments 9 to 11, the sintered powder may be prepared by sintering the first mixture at 900°C to 1,050°C and the first intermediate material may be prepared by sintering the second mixture at 850°C to 1,050°C.
13. In embodiments 9 to 12, the first hard coating material and the second hard coating material may be present in a weight ratio of 1:1.5 to 1:6.
14. In embodiments 9 to 13, the second mixture may further include a third hard coating material.
15. In embodiments 9 to 14, the step of preparing the second mixture may include: mixing the first mixture with the third hard coating material, followed by sintering at 900°C to 1,050°C to prepare a sintered product; and mixing the sintered product with a soft coating material to prepare the second mixture.
16. In embodiments 9 to 15, the method may further include forming a medium coating layer on an outer circumferential surface of the first intermediate material after preparation of the first intermediate material, wherein the medium coating layer is formed by heat treatment of the first intermediate material in a hydrocarbon gas atmosphere.
   A further aspect of the present invention relates to a secondary battery including the silicon carbon composite anode material.
17. The secondary battery may include a cathode; an anode; and an electrolyte disposed between the cathode and the anode, wherein the anode includes the anode material.

The anode material according to the present invention has good durability and structural stability, does not suffer from fracture upon expansion of nano-silicon particles due to intercalation of lithium ions into the nano-silicon particles by adopting a structure that includes a hollow core, multiple hard coating layers spaced apart from each other, and a soft coating layer with nano-silicon particles packed in the hollow core and in the space between the hard coating layers, can minimize reduction in capacity, can be contained in high content in fabrication of an anode for secondary batteries, and has good properties in terms of electrical properties, high capacity, high energy density, high output, long lifespan, reversibility, initial efficiency, productivity, and economic feasibility.

### Brief Description of the Drawings

FIG. 1 is a view of an anode material according to one embodiment of the present invention.
FIG. 2 is a graph depicting a hardness gradient of a hollow core and hard coating layers of an anode material according to the present invention.
FIG. 3 is a view of an anode material according to another embodiment of the present invention.
FIG. 4 is a graph depicting an XRD analysis result of an anode material of Example 1.

### Detailed Description of the Invention

Hereinafter, embodiments of the present invention will be described in detail with reference to the accompanying drawings.

In the drawings, portions irrelevant to the description will be omitted for clarity and like components will be denoted by like reference numerals throughout the specification. Although lengths, thicknesses or widths of various components may be exaggerated for understanding in the drawings, the present invention is not limited thereto.

In addition, the terms as used herein are defined by taking functions of the invention into account and can be changed according to the custom or intention of users or operators. Therefore, definition of the terms should be made according to the overall disclosure set forth herein.

### Silicon carbon composite anode material

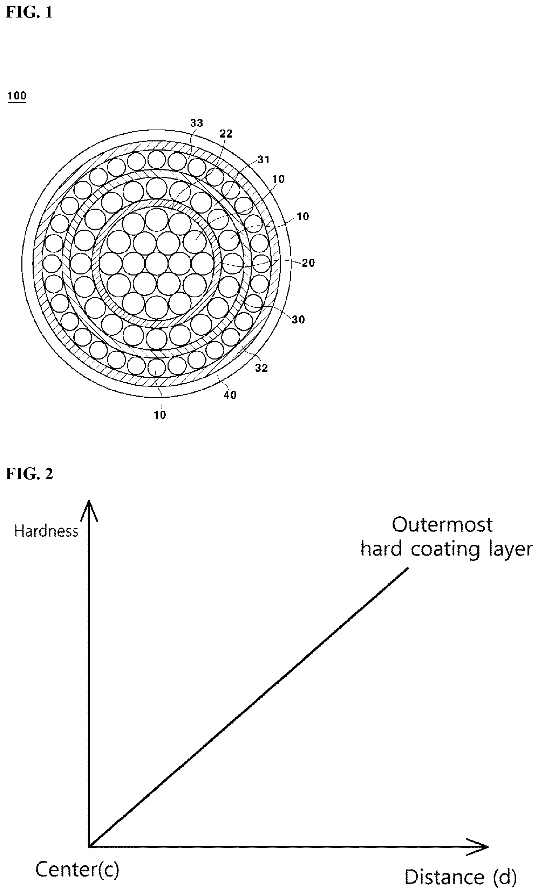

One aspect of the present invention relates to a silicon carbon composite anode material. FIG. 1 is a view of an anode material according to one embodiment of the present invention. Referring to FIG. 1, a silicon carbon composite anode material 100 includes: a hollow core 20 having a hollow portion 22 therein; one or more hard coating layers 30, 32 spaced apart from each other in an outward direction from the hollow core 20; nano-silicon particles 10 packed in the hollow portion 20 and in a separation space defined between the hard coating layers 30, 32; and a soft coating layer 40 formed on an outer circumferential surface of an outermost hard coating layer 32.

Each of the hollow core 20 and the hard coating layers 30, 32 has a higher hardness than the soft coating layer 40, and the anode material has a hardness sequentially increasing from the hollow core 20 to the outermost hard coating layer 32.

In one embodiment, the innermost hard coating layer 30 may have a higher hardness than the hollow core 20.

In one embodiment, the anode material may have a particle density of 1 g/cm³ to 3 g/cm³. Under this condition, the anode material can secure good output and is lightweight.

In one embodiment, the anode material may have an average particle diameter of 5 µm to 30 µm. Under this condition of average particle diameter, the anode material has good properties in terms of capacity, output characteristics and structural stability, and does not suffer from fracture due to expansion of the nano-silicon particles upon charging while securing long lifespan. For example, the anode material may have an average particle diameter of 5 µm to 25 µm, 5 µm to 20 µm, 5 µm to 20 µm, 5 µm to 15 µm, 5 µm to 18 µm, or 6 µm to 12 µm. For example, the anode material may have an average particle diameter of 5, 6, 7, 8, 9, 10, 11, 12, 13, 14, 15, 16, 17, 18, 19, 20, 21, 22, 23, 24, 25, 26, 27, 28, 29 or 30 µm.

### Hollow core

The hollow core has the hollow portion therein and includes nano-silicon particles packed in the hollow portion.

The hollow core may have a spherical shape or an elliptical shape. For example, the hollow core may have a spherical shape.

In one embodiment, the hollow core is formed by sintering a hard coating material described below and includes crystalline hard carbon. Upon formation of the hollow core by sintering the hard coating material, the hollow core has good properties in terms of electrical conductivity, hardness and mechanical strength, and it is possible to prevent damage to or fracture of the hollow core (or the anode material) upon expansion of the nano-silicon particles due to intercalation of lithium ions thereinto in the course of charging a secondary battery to prevent reduction in capacity while securing long lifespan.

In one embodiment, the hollow core may have a pencil hardness of 4H to 6H, as measured in accordance with ISO 15184. Under this condition, the hollow core has good durability and strength, and it is possible to effectively prevent damage to or fracture of the hollow core (or the anode material) upon expansion of the nano-silicon particles due to intercalation of lithium ions thereinto. For example, the hollow core may have a pencil hardness of 4H to 5.5H.

In one embodiment, the hollow portion may have an average diameter of 1 to 10 µm. Under this condition, the anode material has good high output characteristics and can prevent fracture of the anode material due to expansion of the nano-silicon particles to secure long lifespan. For example, the hollow portion may have an average diameter of 3 µm to 9 µm, 3 µm to 8 µm, 3 µm to 7 µm, 3 µm to 6 µm, or 3 µm to 5 µm. For example, the hollow portion may have an average diameter of 1, 2, 3, 4, 5, 6, 7, 8, 9 or 10 µm.

In one embodiment, the hollow core may have a thickness of 5 nm to 150 nm. Under this condition, the hollow core can have good mechanical strength to prevent damage to or fracture of the anode material even upon expansion of the nano-silicon particles. For example, the hollow core may have a thickness of 5 nm to 130 nm, 5 nm to 100 nm, 10 nm to 50 nm, or 10 nm to 40 nm.

In one embodiment, the hollow core may have a density of 1.8 g/cm³ to 2.5 g/cm³. Under this condition, the hollow core can have good structural stability and is lightweight. For example, the hollow core may have a density of 1.8 g/cm³ to 2.1 g/cm³.

In one embodiment, the hollow core may have a specific surface area (BET) of 100 m²/g or less. Under this condition, the hollow core can have structural stability.

In one embodiment, the hollow core may have a purity (impurity content) of 100 ppm or less. Under this condition, the anode material can exhibit good electrical conductivity.

In one embodiment, the hollow core may have a resistivity of 3 µΩ·m to 5 µΩ·m. Under this condition, the anode material can exhibit good electrical conductivity.

In one embodiment, the hollow core may be present in an amount of 1 wt% to 40 wt% based on the total amount of the anode material. Within this range, the anode material can exhibit good properties in terms of durability, structural stability, and electrical properties. For example, the hollow core may be present in an amount of 1 wt% to 35 wt%, 1 wt% to 30 wt%, 1 wt% to 25 wt%, 1 wt% to 20 wt%, 1 wt% to 15 wt%, 1 wt% to 10 wt%, or 5 wt% to 15 wt%. For example, the hollow core the hollow core may be present in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39 or 40 wt%.

### Hard coating layer

The hard coating layers are spaced apart from each other in an outward direction from the hollow core. For example, the hard coating layers may be spaced apart from each other in a concentric circle shape in cross-section around the hollow core.

Referring to FIG. 1, a first hard coating layer 30 and a second hard coating layer 32 may be sequentially formed on an outer circumferential surface of the hollow core 20, and separation spaces 31, 33 may be formed between the hollow core 20 and the first hard coating layer 30 and between the first hard coating layer 30 and the second hard coating layer 32, respectively, and may be packed with nano-silicon particles 10 described below. With this structure, the anode material can secure good high output characteristics and can easily prevent fracture of the hard coating layers (or the anode material) upon expansion of the nano-silicon particles.

In one embodiment, the hard coating layer may be formed singularly or in plural. For example, the anode material may include 2 to 50, 2 to 30, 2 to 15 or 2 to 10 hard coating layers.

In one embodiment, the hard coating layers may be formed by sintering a hard coating material described below. Upon formation of the hard coating layers by sintering the hard coating material, the hard coating layers has good properties in terms of electrical conductivity, hardness and mechanical strength, and it is possible to prevent damage to or fracture of the hard coating layers (or the anode material) upon expansion of the nano-silicon particles due to intercalation of lithium ions thereinto in the course of charging a secondary battery to prevent reduction in capacity while securing long lifespan.

In one embodiment, the hard coating layers may have relatively high crystallinity. Under this condition, the hard coating layers can have good durability and strength.

In one embodiment, the hard coating layers may have a pencil hardness of greater than 4H to 7H, as measured in accordance with ISO 15184. Under this condition, the hard coating layers have good durability and strength, and it is possible to effectively prevent damage to or fracture of the hard coating layers (or the anode material) upon expansion of the nano-silicon particles due to intercalation of lithium ions thereinto. For example, the hard coating layers may have a pencil hardness of 4.5H to 6.5H.

FIG. 2 is a graph depicting a hardness gradient of a first hollow core and hard coating layers of an anode material according to the present invention. Referring to FIG. 2, the anode material has a hardness sequentially increasing from the hollow core (center) to the outermost hard coating layer. Under this condition, the anode material can effectively prevent damage to or fracture of the hard coating layers (or the anode material) even upon expansion of the nano-silicon particles while securing high output and long lifespan. For example, in FIG. 1, the hardness of the anode material may increase in the sequence of the hollow core 20, the first hard coating layer 30 and the second hard coating layer 32.

In one embodiment, the hard coating layers may have higher crystallinity than the hollow core, a medium coating layer and a soft coating layer described below. In addition the medium coating layer may have higher crystallinity than the soft coating layer. Crystallinity can be checked through typical XRD (X-ray diffraction) analysis. Under this condition, the anode material can prevent fracture or cracking due to expansion of the nano-silicon particles to secure long lifespan while securing good properties in terms of electrical conductivity, strength and high output.

In one embodiment, crystallinity of the hard coating layers may sequentially increase in the outward direction.

In one embodiment, each of the hard coating layers may have a thickness of 5 nm to 100 nm. Under this condition, the hard coating layers can have good mechanical strength to prevent damage to or fracture of the anode material even upon expansion of the nano-silicon particles. For example, each of the hard coating layers may have a thickness of 5 nm to 85 nm, 5 nm to 60 nm, 5 nm to 30 nm, or 5 nm to 25 nm.

In one embodiment, a separation distance between the hard coating layers may range from 50 nm to 500 nm. The separation distance may mean a distance between an outer circumferential surface of the hollow core and an inner circumferential surface of the hard coating layer adjacent to the hollow core and a distance between an outer circumferential surface of one hard coating layers and an inner circumferential surface of another hard coating layer adjacent thereto. For example, the separation distance may range from 50 nm to 450 nm, 50 nm to 400 nm, 50 nm to 300 nm, or 50 nm to 100 nm.

In one embodiment, the hard coating layers may have a density of 1.8 g/cm³ to 2.8 g/cm³. Under this condition, the hard coating layers can have good structural stability and are lightweight. For example, the hard coating layers may have a density of 1.8 g/cm³ to 2.4 g/cm³.

In one embodiment, the hard coating layers may have a specific surface area (BET) of 100 m²/g or less. Under this condition, the hard coating layers can exhibit good structural stability.

In one embodiment, the hard coating layers may have a purity (impurity content) of 100 ppm or less. Under this condition, the anode material can exhibit good electrical conductivity.

In one embodiment, the hard coating layers may have a resistivity of 3 µΩ·m to 5 µΩ·m. Under this condition, the anode material can exhibit good electrical conductivity.

In one embodiment, the hard coating layers may be present in an amount of 1 wt% to 70 wt% based on the total weight of the anode material. Within this range, the anode material can exhibit good properties in terms of durability, structural stability, high output, and electrical properties. For example, the hard coating layers may be present in an amount of 1 wt% to 65 wt%, 1 wt% to 60 wt%, 1 wt% to 50 wt%, 1 wt% to 40 wt%, 1 wt% to 35 wt%, 1 wt% to 30 wt%, 1 wt% to 25 wt%, 1 wt% to 20 wt%, 1 wt% to 15 wt%, 1 wt% to 10 wt%, or 5 wt% to 15 wt%. For example, the hard coating layers may be present in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69 or 70 wt%.

In one embodiment, the anode material may include the hollow core and the hard coating layers in a weight ratio of 1:0.1 to 1:15. Within this range of weight ratio, the anode material can have good durability and structural stability, and does not suffer from cracking or fracture upon expansion of the nano-silicon particles to secure long lifespan, high output and good electrical properties. For example, the anode material may include the hollow core and the hard coating layers in a weight ratio of 1:0.5 to 1:15, 1:1 to 1:12, 1:1.5 to 1:10, 1:2 to 1:10, 1:2 to 1:8, or 1:2 to 1:6.

### Nano-silicon particles

The nano-silicon particles serve to secure high capacity and high output of the anode material. In one embodiment, the nano-silicon particles may have a spherical, polyhedral, elliptical or amorphous shape. For example, the nano-silicon particles may have a spherical shape.

Conventionally, in order to prevent fracture of the anode material upon expansion of silicon due to intercalation of lithium ions thereinto, the anode material is prepared by adding flake graphite to silicon, followed by grinding and sintering. However, in preparation of the anode material, oxidation of silicon occurs upon grinding silicon and the flake graphite, thereby causing significant reduction in capacity to less than 1,400 mAh/g.

Conversely, the anode material according to the present invention can prevent fracture of the anode material due to expansion of the nano-silicon particles even without flake graphite by adopting the structure wherein one or more hard coating layers are formed spaced apart from each other on the outer circumferential surface of the hollow core and have a hardness sequentially increasing in the outward direction, thereby securing long lifespan while realizing a high capacity of 2,000 mAh/g or more.

In one embodiment, the nano-silicon particles may exhibit relatively high crystallinity.

In one embodiment, the nano-silicon particles may have an effective peak at a diffraction angle (2θ) in the range of 26° to 30°, 47° to 50°, 53° to 58°, 68° to 72°, 74° to 78°, and/or 88° to 90° in the X-ray diffraction (XRD) spectrum. Under this condition, the nano-silicon particles can secure good properties in terms of high capacity and high output and can effectively prevent fracture of the nano-silicon particles upon charging/discharging.

For example, the nano-silicon particles may have effective peaks at a diffraction angle (2θ) of 27.5° to 28.5°, 47.5° to 48.5°, 56° to 57°, 68° to 69.5°, 75° to 76°, and 88° to 90° in the X-ray diffraction spectrum, in which the effective peaks may represent the (111), (220), (311), (400), (331) and (442) planes. Under this condition, the nano-silicon particles can secure good properties in terms of high capacity and high output and can effectively prevent fracture of the nano-silicon particles upon charging/discharging.

For example, the nano-silicon particles may have effective peaks at a diffraction angle (2θ) of 26° to 30° at the (111) plane and at a diffraction angle (2θ) of 47° to 50° at the (220) plane in the X-ray diffraction spectrum using CuKα-ray of 1.54 Å to 2.0 Å.

For example, the nano-silicon particles may have effective peaks at a diffraction angle (2θ) of 26° to 30° at the (111) plane and at a diffraction angle (2θ) of 47° to 50° at the (220) plane in the X-ray diffraction spectrum using CuKα-ray of 1.54178 Å under conditions: 0.01° step size and 2θ in the range of 10° to 70°.

In one embodiment, the nano-silicon particles may have an FWHM (full width at half maximum) value of the X-ray diffraction angle (2θ) of 0.40° to 0.80°, preferably 0.52° to 0.68°, or 0.59° to 0.71°, at the (111) and (220) planes in X-ray diffraction analysis using CuKα-rays of 1.54Å to 2.0Å. Under this condition, the anode material can secure high capacity and high output of the nano-silicon particles and can significantly suppress fracture of the silicon particles upon charging/discharging.

In one embodiment, the nano-silicon particles may have an average particle diameter of 50 nm to 500 nm. Under this condition, the anode material can secure high capacity and high output of the nano-silicon particles, and does not suffer from cracking or fracture upon expansion of the nano-silicon particles, thereby securing long lifespan. In another embodiment, the nano-silicon particles may have an average particle diameter (d50) of 500 nm or less. For example, the nano-silicon particles may have an average particle diameter (d50) of 50 nm to 300 nm, 50 nm to 280 nm, 55 nm to 270 nm, 55 nm to 260 nm, 60 nm to 260 nm, 80 nm to 230 nm, 90 nm to 220 nm, or 100 nm to 220 nm.

In addition, controlling the maximum average particle diameter (Dmax) of the nano-silicon particles is also important. For example, the nano-silicon particles may have a maximum average particle diameter (Dmax) of 380 nm or less, preferably 320 nm to 360 nm, more preferably 300 nm to 340 nm. A lower Dmax indicates a higher viscosity of the nano-silicon slurry, and the viscosity of the nano-silicon slurry may be controlled to 6,500 cP or less (at 25°C).

In one embodiment, the separation distance between the hard coating layers may be greater than or equal to the average particle diameter of the nano-silicon particles. Under this condition, the anode material does not suffer from fracture due to expansion of the nano-silicon particles, thereby securing long lifespan.

In one embodiment, the number of nano-silicon particles packed in the hollow portion and the separation space may be set such that the total volume of expanded nano-silicon particles formed by intercalation of lithium ions into the nano-silicon particles is equal to or less than the sum of volumes of the hollow portion and the separation space. Under this condition of the number of nano-silicon particles, the hollow core and the hard coating layers (or the anode material) do not suffer from cracking or fracture upon expansion of the nano-silicon particles. For example, the volume of the expanded nano-silicon particles may be calculated based on an assumption that the nano-silicon particles are expanded 4 times an initial volume of the nano-silicon particles.

In one embodiment, the anode material may have a nano-silicon particle-packing density of 75% or less. The nano-silicon particle-packing density may mean the number of nano-silicon particles actually packed in the hollow portion and in the separation space relative to the maximum number of nano-silicon particles capable of being packed in the hollow portion and the separation space. With the above condition of packing density, the anode material can have good properties in terms of high capacity and high output without suffering from fracture of the anode material due to expansion of the nano-silicon particles. For example, the anode material may have a nano-silicon particle-packing density of 20% to 75% or 20 to 50%. In another example, the anode material may have a nano-silicon particle-packing density of 20% to 25%.

In one embodiment, the nano-silicon particles may be present in an amount of 25 wt% to 80 wt% based on the total weight of the anode material. Within this range, the anode material can have good properties in terms of miscibility, durability, high capacity, and high output. For example, the nano-silicon particles may be present in an amount of 25 wt% to 70 wt%. In another embodiment, the nano-silicon particles may be present in an amount of 25 wt% to 75 wt%, 25 wt% to 65 wt%, 25 wt% to 60 wt%, 25 wt% to 50 wt%, 25 wt% to 45 wt%, or 30 to 45 wt%. For example, the nano-silicon particles may be present in an amount of 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79 or 80 wt%.

### Soft coating layer

In one embodiment, the soft coating layer is formed on an outer circumferential surface of the outermost hard coating layer. For example, the soft coating layer may adjoin the outermost hard coating layer.

The soft coating layer may be formed by sintering a soft coating material. In one embodiment, the soft coating material may include at least one of pitch, coke and carbon precursors formed of other organic materials. For example, the pitch may include at least one of pyrolysis fuel oil pitch and coal tar pitch.

Each of the hollow core and the hard coating layers has a higher hardness than the soft coating layer.

In one embodiment, the soft coating layer may have a pencil hardness of less than 3H, as measured in accordance with ISO 15184. Under this condition, the soft coating layer can very effectively relieve expansion of the hard coating layers due to expansion of the nano-silicon particles to prevent damage to or fracture of the anode material while securing long lifespan. For example, the soft coating layer may have a pencil hardness of B to 2.5H or B to 1H.

In one embodiment, the soft coating layer may have a thickness of 10 nm to 150 nm. Under this condition, the soft coating layer can effectively relieve expansion of the hard coating layers due to expansion of the nano-silicon particles to prevent damage to or fracture of the anode material while securing long lifespan. For example, the soft coating layer may have a thickness of 5 nm to 80 nm, 5 nm to 60 nm, 5 nm to 30 nm, or 5 nm to 20 nm.

In one embodiment, the soft coating layer may have a density of 1.5 g/cm³ or less. Under this condition, the soft coating layer can have good structural stability and is lightweight. For example, the soft coating layer may have a density of 0.3 g/cm³ to 1.5 g/cm³.

In one embodiment, the soft coating layer may have a specific surface area (BET) of 300 m²/g or more. Under this condition, the soft coating layer can have good structural stability. For example, the soft coating layer may have a specific surface area (BET) of 300 m²/g to 2,500 m²/g.

In one embodiment, the soft coating layer may have a purity (impurity content) of 1,000 ppm or more. Under this condition, the anode material can exhibit good electrical conductivity. For example, the soft coating layer may have a purity (impurity content) of 1,000 ppm to 5,000 ppm.

In one embodiment, the soft coating layer may have a resistivity of 50 µΩ·m or more. Under this condition, the anode material can exhibit good electrical conductivity. For example, the soft coating layer may have a resistivity of 50 µΩ·m to 300 µΩ·m.

In one embodiment, the soft coating layer may be present in an amount of 1 wt% to 40 wt% based on the total weight of the anode material. Within this range, the soft coating layer is lightweight, can prevent cracking and fracture of the hard coating layers (or the anode material) due to expansion of the nano-silicon particles, and can minimize reduction in capacity to secure long lifespan. For example, the soft coating layer may be present in an amount of 1 wt% to to 35 wt%, 1 wt% to 30 wt%, 1 wt% to 25 wt%, 1 wt% to 20 wt%, 1 wt% to 15 wt%, 1 wt% to 10 wt%, or 5 to 15 wt%. For example, the soft coating layer may be present in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39 or 40 wt%.

In one embodiment, the anode material may include the hollow core, the soft coating layer and the hard coating layers in a weight ratio of 1:0.1 to 5:0.1 to 15. Within this range, the anode material can prevent cracking and fracture of the hard coating layers (or the anode material) due to expansion of the nano-silicon particles and can minimize reduction in capacity to secure long lifespan. For example, the anode material may include the hollow core, the soft coating layer and the hard coating layers in a weight ratio of 1:0.1 to 4:0.5 to 15, 1:0.1 to 3:1 to 12, 1:0.3 to 2:1.5 to 10, 1:0.3 to 2:2 to 10, 1:0.5 to 2:2 to 8, or 1:0.5 to 2:2 to 6.

### Medium coating layer

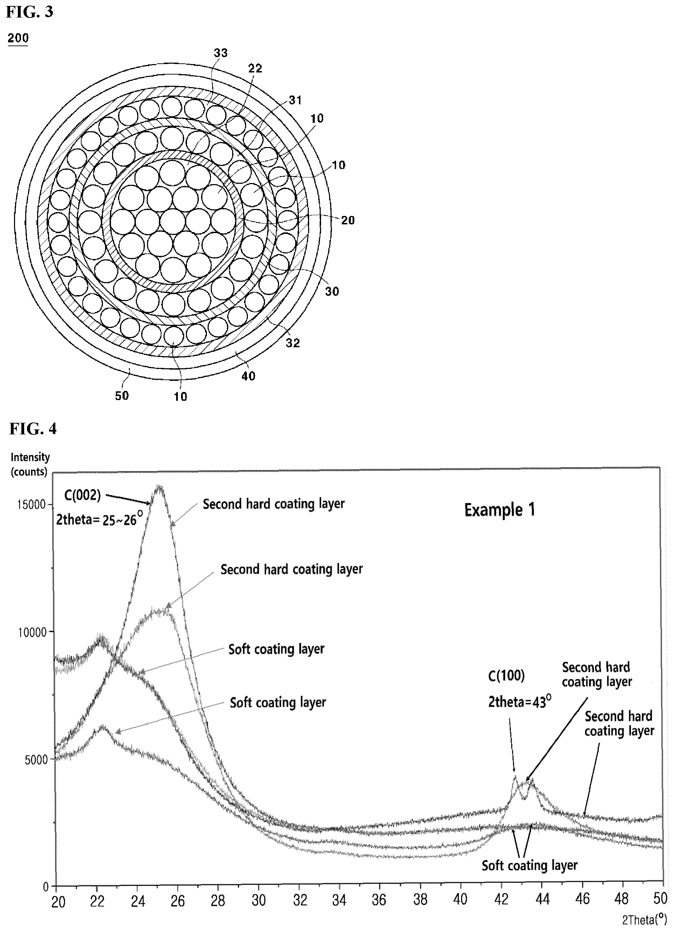

FIG. 3 is a view of an anode material according to another embodiment of the present invention. Referring to FIG. 3, the anode material 200 further includes a medium coating layer 50 formed on an outer circumferential surface of the soft coating layer 40.

In one embodiment, the medium coating layer may be a non-crystalline or crystalline layer. Under this condition, the anode material can exhibit high strength and durability.

The medium coating layer has a higher hardness than the soft coating layer.

In one embodiment, the medium coating layer may be formed by heat treatment of at least one of hydrocarbon gas and carbon black. For example, the hydrocarbon gas may include at least one of methane (CH₄), ethane (C₂H₆), propane (C₃H₈), butane (C₄H₁₀), and pentane (C₅H₁₂).

In one embodiment, the medium coating layer may have a pencil hardness of 2H to less than 4H, as measured in accordance with ISO 15184. Under this condition, the medium coating layer can prevent fracture of the anode material due to expansion of the nano-silicon particles to secure long lifespan of the anode material. For example, the medium coating layer may have a pencil hardness of 2H to 3H.

In one embodiment, the medium coating layer may have a thickness of 10 nm to 150 nm. Under this condition, the medium coating layer can prevent damage to or fracture of the anode material upon expansion of the nano-silicon particles. For example, the medium coating layer may have a thickness of 10 nm to 100 nm, 10 nm to 90 nm, 10 nm to 60 nm, 10 nm to 30 nm, or 10 nm to 20 nm.

In one embodiment, the medium coating layer may have a density of less than 1.8 g/cm³. Under this condition, the medium coating layer can exhibit good structural stability and is lightweight. For example, the medium coating layer may have a density of greater than 1.5 g/cm³ to 1.7 g/cm³.

In one embodiment, the medium coating layer may have a specific surface area (BET) of 100 m²/g to 200 m²/g. Under this condition, the anode material can have good structural stability.

In one embodiment, the medium coating layer may have a purity (impurity content) of 500 ppm or less. Under this condition, the anode material can exhibit good electrical conductivity.

In one embodiment, the medium coating layer may have a resistivity of 20 µΩ·m to 40 µΩ·m. Under this condition, the anode material can exhibit good electrical conductivity.

In one embodiment, the medium coating layer may be present in an amount of 1 wt% to 30 wt% based on the total weight of the anode material. Within this range, the medium coating layer has good electrical conductivity, can prevent cracking and fracture of the anode material upon expansion of the nano-silicon particles, and can minimize reduction in capacity to secure long lifespan. For example, the medium coating layer may be present in an amount of 1 wt% to 25 wt%, 1 wt% to 20 wt%, 1 wt% to 15 wt%, 1 wt% to 10 wt%, 1 wt% to 8 wt%, 2 wt% to 8 wt%, or 2 wt% to 5 wt%. For example, the medium coating layer may be present in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29 or 30 wt%.

In one embodiment, the anode material may include the hollow core, the soft coating layer, the medium coating layer and the hard coating layers in a weight ratio of 1:0.1 to 5:0.1 to 5:0.1 to 15. Within this range, the anode material can prevent cracking and fracture of the hard coating layers (or the anode material) due to expansion of the nano-silicon particles and can minimize reduction in capacity to secure long lifespan. For example, the anode material may include the hollow core, the soft coating layer, the medium coating layer and the hard coating layers in a weight ratio of 1:0.1 to 4:0.1 to 4:0.5 to 15, 1:0.1 to 3:0.1 to 3:1 to 12, 1:0.3 to 2:0.3 to 2:1.5 to 10, 1:0.3 to 2:0.3 to 2:2 to 10, 1:0.5 to 2:0.5 to 2:2 to 8, or 1:0.5 to 2:0.5 to 1.5:2 to 6.

### Method of preparing silicon carbon composite anode material

Another aspect of the present invention relates to a method of preparing the silicon carbon composite anode material. In one embodiment, the anode material preparation method may include: a dried powder preparation step (S10); a first mixture preparation step (S20); a sintered powder preparation step (S30); a second mixture preparation step (S40); and a first intermediate material preparation step (S50).

More specifically, the anode material preparation method includes: (S10) preparing dried powder by drying a mixed slurry including a nano-silicon slurry and a first hard coating material; (S20) preparing a first mixture including the dried powder and a second hard coating material; (S30) sintering the first mixture to prepare sintered powder; (S40) preparing a second mixture including the sintered powder and a soft coating material; and (S50) sintering the second mixture to prepare a first intermediate material.

The first intermediate material includes a hollow core having a hollow portion therein; one or more hard coating layers spaced apart from each other in an outward direction from the hollow core; nano-silicon particles packed in the hollow portion and in a separation space defined between the hard coating layers; and a soft coating layer formed on an outer circumferential surface of an outermost hard coating layer, wherein each of the hollow core and the hard coating layers has a higher hardness than the soft coating layer, and wherein the anode material has a hardness sequentially increasing from the hollow core to the outermost hard coating layer.

### (S10) Dried powder preparation step

In this step, a mixed slurry including the nano-silicon slurry and the first hard coating material is dried to prepare dried powder.

In one embodiment, the nano-silicon slurry may include nano-silicon particles. In one embodiment, the nano-silicon slurry may be prepared by dispersing silicon powder and a dispersant in a first solvent to prepare a dispersion, followed by grinding the dispersion.

In one embodiment, the first solvent may include at least one of water, ethanol, isopropyl alcohol, and potassium hydroxide (KOH). The first solvent can secure good miscibility and dispersibility of the nano-silicon slurry without oxidation of the silicon powder.

In one embodiment, the dispersant may include at least one of poly(vinyl pyrrolidone), nitrile butadiene rubber, hydrogenated nitrile butadiene rubber, stearic acid, palmitic acid, oleic acid, and lauric acid. In another example, the dispersant may include at least one of stearic acid, pyrolysis fuel oil pitch, coal tar pitch, coal tar, glucose, sucrose, polyimide, polyacrylic acid (PAA), and polyvinyl alcohol (PVA). The dispersant can secure good dispersion of the silicon powder while allowing easy preparation of the nano-silicon slurry including the nano-silicon particles. For example, the dispersant may include stearic acid. For example, the dispersant may be a mixture of stearic acid and N-methyl pyrrolidone (NMP).

In one embodiment, the nano-silicon slurry may include 100 parts by weight of the silicon powder, 5 to 1,500 parts by weight of the first solvent, and 0.1 to 30 parts by weight of the dispersant. Under this condition, the nano-silicon slurry can secure good miscibility and dispersion of the nano-silicon particles and can be easily prepared. For example, the nano-silicon slurry may include 100 parts by weight of the silicon powder, 800 to 1,000 parts by weight of the first solvent, and 0.5 to 25 parts by weight of the dispersant.

For example, the nano-silicon slurry may be prepared by adding the dispersant to the first solvent in amounts as above, mixing the dispersant with the first solvent, and mixing the silicon powder with the mixture to prepare a dispersion, followed by grinding the dispersion.

In one embodiment, grinding may be performed by milling. In one embodiment, milling may be performed using a bead-mill, a ball-mill, a high energy ball-mill, a planetary mill, a stirred ball-mill, a vibration mill, or the like.

For example, the ball-mill may be formed of a chemically inert material that does not react with the silicon powder and other organic components. For example, the ball-mill may include zirconia (ZrO₂). In one embodiment, the ball mill may have an average particle diameter of 0.1 mm to 1 mm. Under this condition, the nano-silicon particles can be easily prepared.

For example, a weight ratio of zirconia beads to the silicon powder (zirconia beads/silicon powder, ball per ratio) may range from 1/3.5 to 1/10. In addition, upon dispersion of the dispersant, a rotor of the grinding machine may be rotated at 2,200 rpm to 2,600 rpm.

In one embodiment, the silicon powder may have an average particle diameter (d50) of 0.3 µm to 3.5 µm. Under this condition, the silicon powder can be easily mixed and ground, and the nano-silicon particles having a desired average particle diameter can be easily prepared. For example, the silicon powder may have an average particle diameter (d50) of 0.5 µm to 2.5 µm. In another example, the silicon powder may have an average particle diameter (d50) of 0.3 µm to 1.8 µm.

In one embodiment, the silicon powder may have a maximum particle diameter (Dmax) of 10 µm or less. Under this condition, the nano-silicon particles having a desired average particle diameter can be easily prepared.

In one embodiment, the silicon powder may be present in an amount of 6.5 wt% to 17.8 wt% in the nano-silicon slurry. Under this condition, the nano-silicon slurry can secure good miscibility and workability.

In one embodiment, the nano-silicon slurry may have a viscosity of 2,000 cP to 6,500 cP (at 25°C). Under this condition, the nano-silicon slurry can secure good miscibility and dispersion, and the number of nano-silicon particles packed in the hollow portion can be easily controlled.

In one embodiment, the nano-silicon particles may have an average particle diameter of 50 nm to 500 nm. In another embodiment, the nano-silicon particles may have an average particle diameter (d50) of 500 nm or less, more preferably 160 nm to 260 nm, 180 nm to 230 nm, 190 nm to 220 nm, or 200 nm to 220 nm. In addition, controlling the maximum average particle diameter (Dmax) of the nano-silicon particles is very important. For example, the nano-silicon particles may have a maximum particle diameter (Dmax) of 380 nm or less, preferably 320 nm to 360 nm. More preferably, the nano-silicon particles have a maximum particle diameter (Dmax) of 300 nm to 340 nm. A lower Dmax value can cause increase in viscosity of the nano-silicon slurry and the viscosity of the nano-silicon slurry may be adjusted to 6,500 cP or less (at 25°C).

In one embodiment, the nano-silicon particles may have a spherical, polyhedral, elliptical or amorphous shape. For example, the nano-silicon particles may have a spherical shape.

The first hard coating material forms the hollow core and can prevent fracture of the anode material upon expansion of the nano-silicon particles while exhibiting good electrical properties.

In one embodiment, the first hard coating material may include a carbon material.

In one embodiment, the first hard coating material may have a pencil hardness of 4H or higher, as measured in accordance with ISO 15184. Under this condition, the first hard coating material can prevent fracture of the anode material upon expansion of the nano-silicon particles while securing good properties in terms of high output and electrical properties. For example, the first hard coating material may have a pencil hardness of 4H to 6H. For example, the first hard coating material may include a carbon material having a pencil hardness of 4H to 6H.

For example, the first hard coating material may include NanoMollisAdamas products available from Lemon Energy Co., Ltd.

The first hard coating material may have an amorphous phase. In addition, the hard coating material is prepared through self-assembly and exhibits good properties in terms of isotropic properties and heat stability to prevent structural change at high temperature (at about 3,000°C).

The first hard coating material may have high-gas impermeability while exhibiting good chemical resistance and electrical conductivity. In addition, the first hard coating material may be dust free and may have a purity (impurity content) of 5 ppm or less or a purity (impurity content) of 2 ppm or less. Under this condition, the first hard coating material can secure good strength and electrical properties, and the anode material can exhibit good electrical conductivity.

In one embodiment, the first hard coating material may have a resistivity of 3 µΩ·m to 5 µΩ·m. Under this condition, the anode material can exhibit good electrical conductivity.

The first hard coating material may have a spherical, polyhedral, elliptical or amorphous shape. For example, the first hard coating material may have a spherical shape.

In one embodiment, the first hard coating material may have an average particle diameter (d50) of 3 nm to 2.5 µm. Under this condition, the hollow core can be easily formed by sintering the first hard coating material. For example, the first hard coating material may have an average particle diameter (d50) of 5 mn to 1,000 nm, 10 nm to 500 nm, or 15 nm to 200 nm.

In one embodiment, the first hard coating material may be used in the form of a hard coating solution containing the first hard coating material and a solvent.

In one embodiment, the solvent may include at least one of water, an alcohol-based solvent, an amide-based solvent, an ester-based solvent, and a hydrocarbon-based solvent. The solvent serves to secure good miscibility and workability. The alcohol-based solvent may include at least one of methanol, ethanol, isopropanol, and butanol. The amide-based solvent may include at least one of N-methyl-2-pyrrolidone (NMP), dimethyl acetamide (DMAC), and dimethyl formamide (DMF). The hydrocarbon-based solvent may include toluene and/or xylene.

In one embodiment, the mixed slurry may include 90 wt% to 99.9 wt% of the nano-silicon slurry and 0.1 wt% to 10 wt% of the first hard coating material. Within this range, the mixed slurry can secure good miscibility and dispersion. For example, the mixed slurry may include 95 wt% to 99 wt% of the nano-silicon slurry and 1 wt% to 5 wt% of the first hard coating material.

In one embodiment, the particle size of the anode material can be easily adjusted by drying the mixed slurry. For example, drying may be performed using a spray dryer or the like. For example, spray drying may be performed using a spray dryer provided with a single-fluid nozzle, a two-fluid nozzle, or a four-fluid nozzle.

In one embodiment, the dried powder may have a spherical, polyhedral or elliptical shape. For example, the dried powder may have a spherical shape.

In one embodiment, the dried powder may have an average particle diameter (or size) of 0.1 µm to 15 µm. Under this condition, the dried powder can secure good miscibility and formability.

In one embodiment, as prepared by spray-drying the mixed slurry using a single-fluid nozzle at an air flow rate of 650 sccm to 850 sccm with the spray dryer set to have an outlet temperature of 70°C to 130°C, the dried powder may have an average particle diameter of 7 µm to 14 µm. In another embodiment, as prepared by spray drying the mixed slurry using a four-fluid nozzle, the dried powder may have an average particle diameter of 0.1 µm to 8 µm.

### (S20) First mixture preparation step

In this step, the first mixture including the dried powder and the second hard coating material is prepared.

The second hard coating material may form the hollow core or the hard coating layers. With the second hard coating material, the first mixture can exhibit good electrical properties while preventing fracture of the anode material upon expansion of the nano-silicon particles.

In one embodiment, the first mixture may be used in the form of a hard coating solution containing the second hard coating material and a solvent.

In one embodiment, the solvent may include at least one of water, an alcohol-based solvent, an amide-based solvent, an ester-based solvent, and a hydrocarbon-based solvent. The solvent serves to secure good miscibility and workability. The alcohol-based solvent may include at least one of methanol, ethanol, isopropanol, and butanol. The amide-based solvent may include at least one of N-methyl-2-pyrrolidone (NMP), dimethyl acetamide (DMAC), and dimethyl formamide (DMF). The hydrocarbon-based solvent may include toluene and/or xylene.

In one embodiment, the second hard coating material may include a carbon material.

In one embodiment, the second hard coating material may have a pencil hardness of 4H or higher, as measured in accordance with ISO 15184. Under this condition, the second hard coating material can prevent fracture of the anode material upon expansion of the nano-silicon particles while securing good properties in terms of high output and electrical properties. For example, the second hard coating material may have a pencil hardness of 4.5H to 7H.

For example, the second hard coating material may include a carbon material having a pencil hardness of 4.5H to 7H.

For example, the second hard coating material may include NanoMollisAdamas products available from Lemon Energy Co., Ltd.

The second hard coating material may have an amorphous phase. In addition, the second hard coating material is prepared through self-assembly and exhibits good properties in terms of isotropic properties and heat stability to prevent structural change at high temperature (at about 3,000°C).

The second hard coating material may have high-gas impermeability while exhibiting good chemical resistance and electrical conductivity. In addition, the second hard coating material may be dust free and may have a purity (impurity content) of 5 ppm or less or a purity (impurity content) of 2 ppm or less. Under this condition, the second hard coating material can secure good strength and electrical properties, and the anode material can exhibit good electrical conductivity.

In one embodiment, the second hard coating material may have a resistivity of 3 µΩ·m to 5 µΩ·m. Under this condition, the anode material can exhibit good electrical conductivity.

The second hard coating material may have a spherical, polyhedral, elliptical or amorphous shape. For example, the second hard coating material may have a spherical shape.

In one embodiment, the second hard coating material may have an average particle diameter (d50) of 3 nm to 2.5 µm. Under this condition, the hollow core or the hard coating layers can be easily formed. For example, the second hard coating material may have an average particle diameter (d50) of 5 nm to 1,000 nm, 10 nm to 500 nm, or 15 nm to 200 nm.

In one embodiment, the first mixture may include 85 wt% to 97 wt% of the dried powder and 3 wt% to 15 wt% of the second hard coating material. Within this range, the first mixture can have good miscibility and dispersion while securing long lifespan and good electrical properties of the anode material. For example, the first mixture may include 90 wt% to 96 wt% of the dried powder and 4 wt% to 10 wt% of the second hard coating material.

In one embodiment, the first hard coating material and the second hard coating material may be present in a weight ratio of 1:1.5 to 1:6. Within this range, the first intermediate material including the hollow core having the hollow portion therein and one or more hard coating layers spaced apart from each other can be easily formed. For example, the first hard coating material and the second hard coating material may be present in a weight ratio of 1:2 to 1:5, 1:2.5 to 1:4.5, or 1:2.5 to 1:4.

In one embodiment, the method may further include pressing the first mixture after preparation of the first mixture. For example, a pressed product may be prepared by pressing (uniaxially pressing) the first mixture at 10 atm to 60 atm in one direction. In preparation of the pressed product under this pressing condition, the anode material can have good properties in terms of electrical properties, long lifespan and capacity through adjustment of the inner porosity of the anode material.

### (S30) Sintered powder preparation step

In this step, the sintered powder is prepared by sintering the first mixture.

In one embodiment, the sintered powder may be prepared by sintering the first mixture at 900°C to 1,050°C. By sintering under this condition, the anode material can exhibit good mechanical properties. For example, the sintered powder may be prepared by sintering the first mixture at 920°C to 1,020°C or at 950°C to 975°C.

Sintering of the first mixture may be performed under an inert gas atmosphere. The inert gas may include nitrogen.

### (S40) Second mixture preparation step

In this step, the second mixture including the sintered powder and the soft coating material is prepared.

In one embodiment, the soft coating material may include at least one of pitch, coke and carbon precursors formed of other organic materials. For example, the pitch may include at least one of pyrolysis fuel oil pitch and coal tar pitch.

In one embodiment, the soft coating material may be used in the form of a soft coating solution containing the soft coating material and a solvent.

In one embodiment, the solvent may include at least one of water, an alcohol-based solvent, an amide-based solvent, an ester-based solvent, and a hydrocarbon-based solvent. The solvent serves to secure good miscibility and workability. The alcohol-based solvent may include at least one of methanol, ethanol, isopropanol, and butanol. The amide-based solvent may include at least one of N-methyl-2-pyrrolidone (NMP), dimethyl acetamide (DMAC), and dimethyl formamide (DMF). The hydrocarbon-based solvent may include toluene and/or xylene.

In one embodiment, the soft coating material may have an average particle diameter (d50) of 5 nm to 10 µm. Under this condition, the second mixture can be easily prepared. For example, the soft coating material may have an average particle diameter (d50) of 10 nm to 5 µm, 30 nm to 3 µm, 10 nm to 1 µm or 10 to 500 nm.

In one embodiment, the second mixture may include 70 wt% to 99 wt% of the sintered powder and 1 wt% to 30 wt% of the soft coating material. Under this condition, the second mixture can be easily prepared.

In one embodiment, the second mixture may further include a third hard coating material.

The third hard coating material may form the hard coating layers. With the third hard coating material, the anode material does not suffer from fracture upon expansion of the nano-silicon particles while securing good electrical properties.

In one embodiment, the second mixture may be used in the form of a hard coating solution containing the third hard coating material and a solvent.

In one embodiment, the solvent may include at least one of water, an alcohol-based solvent, an amide-based solvent, an ester-based solvent, and a hydrocarbon-based solvent. The solvent serves to secure good miscibility and workability. The alcohol-based solvent may include at least one of methanol, ethanol, isopropanol, and butanol. The amide-based solvent may include at least one of N-methyl-2-pyrrolidone (NMP), dimethyl acetamide (DMAC), and dimethyl formamide (DMF). The hydrocarbon-based solvent may include toluene and/or xylene.

In one embodiment, the third hard coating material may include a carbon material.

In one embodiment, the third hard coating material may have a pencil hardness of 4H or higher, as measured in accordance with ISO 15184. Under this condition, the third hard coating material can prevent fracture of the anode material upon expansion of the nano-silicon particles while securing good properties in terms of high output and electrical properties. For example, the second hard coating material may have a pencil hardness of 4.5H to 7H.

For example, the third hard coating material may include a carbon material having a pencil hardness of 4.5H to 7H.

For example, the third hard coating material may include NanoMollisAdamas products available from Lemon Energy Co., Ltd.

The third hard coating material may have an amorphous phase. In addition, the third hard coating material is prepared through self-assembly and exhibits good properties in terms of isotropic properties and heat stability to prevent structural change at high temperature (at about 3,000°C).

The third hard coating material may have high-gas impermeability while exhibiting good chemical resistance and electrical conductivity. In addition, the second hard coating material may be dust free and may have a purity (impurity content) of 5 ppm or less or a purity (impurity content) of 2 ppm or less. Under this condition, the third hard coating material can secure good strength and electrical properties, and the anode material can exhibit good electrical conductivity

In one embodiment, the third hard coating material may have a resistivity of 3 µΩ·m to 5 µΩ·m. Under this condition, the anode material can exhibit good electrical conductivity.

The third hard coating material may have a spherical, polyhedral, elliptical or amorphous shape. For example, the third hard coating material may have a spherical shape.

In one embodiment, the third hard coating material may have an average particle diameter (d50) of 3 nm to 2.5 µm. Under this condition, the hollow core can be easily formed by sintering described below. For example, the third hard coating material may have an average particle diameter (d50) of 5 nm to 1,000 nm, 10 nm to 500 nm, or 15 nm to 200 nm.

In one embodiment, the second mixture may be prepared by mixing the sintered powder, the third hard coating material and the soft coating material.

In another embodiment, the second mixture may be prepared by pressing the sintered powder and the third hard coating material to prepare a pressed product and sintering the pressed product to prepare a sintered product, followed by mixing the sintered product with the soft coating material.

For example, the pressed product may be prepared by pressing (uniaxially pressing) the sintered powder and the third hard coating material at 10 atm to 60 atm in one direction. In preparation of the pressed product under this pressing condition, the anode material can have good properties in terms of electrical properties, long lifespan and capacity through adjustment of the inner porosity of the anode material.

In another embodiment, the step of preparing the second mixture may include: mixing the first mixture with third hard coating material, followed by sintering at 900°C to 1,050°C to prepare a sintered product; and mixing the sintered product with the soft coating material to prepare the second mixture. Under this condition, the second mixture can be easily prepared. For example, sintering may be performed at 930°C to 960°C.

In one embodiment, the second mixture may include 50 wt% to 80 wt% of the sintered powder, 3 wt% to 25 wt% of the third hard coating material, and 1 wt% to 30 wt% of the soft coating material. Within this range, the second mixture can be easily prepared.

In one embodiment, the first hard coating material, the second hard coating material and the third hard coating material may be present in a weight ratio of 1:1.5 to 6:1.5 to 15. Within this range, the first intermediate material including the hollow core having the hollow portion therein and one or more hard coating layers spaced apart from each other can be easily formed, and the anode material can have a hardness sequentially increasing in the outward direction when two or more hard coating layers are formed. For example, the first hard coating material, the second hard coating material and the third hard coating material may be present in a weight ratio of 1:1.5 to 6:1.5 to 15, 1:2 to 5:2 to 12, 1:2.5 to 4.5:3 to 10, or 1:2.5 to 4:4 to 7.

### (S50) First intermediate material preparation step

In this step, the first intermediate material is prepared by sintering the second mixture.

In one embodiment, the first intermediate material may be prepared by sintering the second mixture at 850°C to 1,050°C. By sintering under this condition, the first intermediate material including a soft coating layer on an outer circumferential surface of the outermost hard coating layer can be easily formed. For example, the first intermediate material may be prepared by sintering the second mixture at 850°C to 975°C or at 860°C to 950°C.

Sintering of the second mixture may be performed in an inert gas atmosphere. The inert gas may include nitrogen.

The first intermediate material includes a hollow core having a hollow portion therein; one or more hard coating layers spaced apart from each other in an outward direction from the hollow core; nano-silicon particles packed in the hollow portion and in a separation space defined between the hard coating layers; and a soft coating layer formed on the outer circumferential surface of the outermost hard coating layer.

In one embodiment, each of the hollow core and the hard coating layers has a higher hardness than the soft coating layer, and the anode material has a hardness sequentially increasing from the hollow core to the outermost hard coating layer.

In one embodiment, the first intermediate material (or the anode material) may include 25 wt% to 80 wt% of the nano-silicon particles, 1 wt% to 40 wt% of the hollow core, 1 wt% to 70 wt% of the hard coating layers, and 1 wt% to 40 wt% of the soft coating layer. The hollow core may be the same as described above.

In one embodiment, the hollow core may have a pencil hardness of 4H to 6H, as measured in accordance with ISO 15184. Under this condition, the hollow core has good durability and strength, and it is possible to effectively prevent damage to or fracture of the hollow core (or the anode material) upon expansion of the nano-silicon particles due to intercalation of lithium ions thereinto. For example, the hollow core may have a pencil hardness of 4H to 5.5H.

The hard coating layers may be the same as described above.

In one embodiment, the hard coating layers may have a pencil hardness of greater than 4H to 7H, as measured in accordance with ISO 15184. Under this condition, the hard coating layers have good durability and strength, and it is possible to effectively prevent damage to or fracture of the hard coating layers (or the anode material) upon expansion of the nano-silicon particles due to intercalation of lithium ions thereinto. For example, the hard coating layers may have a pencil hardness of 4.5H to 6.5H.

In one embodiment, the hard coating layers have a hardness sequentially increasing from the hollow core (center) in the outward direction. Under this condition, the anode material can effectively prevent damage to or fracture of the hard coating layers (or the anode material) even upon expansion of the nano-silicon particles while securing high output and long lifespan.

In one embodiment, the separation distance between the hard coating layers may be greater than or equal to the average particle diameter of the nano-silicon particles. Under this condition, the hard coating layers can prevent fracture of the anode material due to expansion of the nano-silicon particles to secure long lifespan.

In one embodiment, the number of nano-silicon particles packed in the hollow portion and the separation space may be set such that the total volume of expanded nano-silicon particles formed by intercalation of lithium ions into the nano-silicon particles is equal to or less than the sum of the volumes of the hollow portion and the separation space. Under this condition of the number of nano-silicon particles, the hollow core and the hard coating layers (or the anode material) do not suffer from cracking or fracture upon expansion of the nano-silicon particles. For example, the volume of the expanded nano-silicon particles may be calculated based on an assumption that the nano-silicon particles are expanded 4 times an initial volume of the nano-silicon particles.

The soft coating layer may be the same as described above.

In one embodiment, the soft coating layer may have a pencil hardness of less than 3H, as measured in accordance with ISO 15184. Under this condition, the soft coating layer can very effectively relieve expansion of the hard coating layers due to expansion of the nano-silicon particles to prevent damage to or fracture of the anode material while securing long lifespan. For example, the soft coating layer may have a pencil hardness of B to 2.5H or B to 1H.

In one embodiment, the hollow core may have a thickness of 5 nm to 150 nm. Under this condition, the hollow core can have good mechanical strength to prevent damage to or fracture of the anode material even upon expansion of the nano-silicon particles. For example, the hollow core may have a thickness of 5 nm to 130 nm, 5 nm to 100 nm, 10 nm to 50 nm, or 10 nm to 40 nm.

In one embodiment, each of the hard coating layers may have a thickness of 5 nm to 100 nm. Under this condition, the hard coating layers can have good mechanical strength to prevent damage to or fracture of the anode material even upon expansion of the nano-silicon particles. For example, each of the hard coating layers may have a thickness of 5 nm to 85 nm, 5 nm to 60 nm, 5 nm to 30 nm, or 5 nm to 25 nm.

In one embodiment, the soft coating layer may have a thickness of 10 nm to 150 nm. Under this condition, the soft coating layer can effectively relieve expansion of the hard coating layers due to expansion of the nano-silicon particles to prevent damage to or fracture of the anode material while securing long lifespan. For example, the soft coating layer may have a thickness of 5 nm to 80 nm, 5 nm to 60 nm, 5 nm to 30 nm, or 5 nm to 20 nm.

The nano-silicon particles may be the same as described above.

For example, the nano-silicon particles may have an effective peak at a diffraction angle (2Θ) of 27.5° to 28.5°, 47.5° to 48.5°, 56° to 57°, 68° to 69.5°, and 75° to 76°. Under this condition, the nano-silicon particles can secure good properties in terms of high capacity and high output and can effectively prevent fracture of the nano-silicon particles upon charging/discharging. For example, the nano-silicon particles may have effective peaks at a diffraction angle (2θ) of 26° to 30° at the (111) plane and at a diffraction angle (2θ) of 47° to 50° at the (220) plane in the X-ray diffraction spectrum using CuKα-ray of 1.54 Å to 2.0 Å.

For example, the nano-silicon particles may have effective peaks at a diffraction angle (2θ) of 26° to 30° at the (111) plane and at a diffraction angle (2θ) of 47° to 50° at the (220) plane in the X-ray diffraction spectrum using CuKα-ray of 1.54178 Å under conditions: 0.01° step size and 2θ in the range of 10° to 70°.

In one embodiment, the nano-silicon particles may have an FWHM value of the X-ray diffraction angle (2θ) in the range of 0.40° to 0.80°, preferably 0.52° to 0.68°, or 0.59° to 0.71°, at the (111) and (220) planes in X-ray diffraction analysis using CuKα-rays of 1.54Å to 2.0Å. Under this condition, the anode material can secure high capacity and high output of the nano-silicon particles and can significantly suppress fracture of the silicon particles upon charging/discharging.

In one embodiment, the nano-silicon particles may have an average particle diameter of 50 nm to 500 nm. Under this condition, the anode material can secure high capacity and high output of the nano-silicon particles, and can prevent cracking or fracture of the anode material upon expansion of the nano-silicon particles to secure long lifespan. In another embodiment, the nano-silicon particles may have an average particle diameter (d50) of 500 nm or less. For example, the nano-silicon particles may have an average particle diameter (d50) of 50 nm to 300 nm, 50 nm to 280 nm, 50 nm to 270 nm, 50 nm to 260 nm, 160 nm to 260 nm, 180 nm to 230 nm, 190 nm to 220 nm, or 200 nm to 220 nm.

In one embodiment, the first intermediate material (or the anode material) may include the hollow core, the soft coating layer and the hard coating layers in a weight ratio of 1:0.1 to 5:0.1 to 15. Within this range, the first intermediate material can prevent cracking and fracture of the hard coating layers (or the anode material) due to expansion of the nano-silicon particles and can minimize reduction in capacity to secure long lifespan. For example, the first intermediate material may include the hollow core, soft coating layer and hard coating layers in a weight ratio of 1:0.1 to 4:0.5 to 15, 1:0.1 to 3:1 to 12, 1:0.3 to 2:1.5 to 10, 1:0.3 to 2:2 to 10, 1:0.5 to 2:2 to 8, or 1:0.5 to 2:2 to 6.

In one embodiment, the first intermediate material (or the anode material) may have a nano-silicon particle-packing density of 75% or less. The nano-silicon particle-packing density may mean the number of nano-silicon particles actually packed in the hollow portion and in the separation space relative to the maximum number of nano-silicon particles capable of being packed in the hollow portion and the separation space. With the above condition of packing density, the anode material can have good properties in terms of high capacity and high output without suffering from fracture of the anode material due to expansion of the nano-silicon particles. For example, the anode material may have a nano-silicon particle-packing density of 20% to 75% or 20 to 50%. In another example, the anode material may have a nano-silicon particle-packing density of 20% to 25%.

### (S60) Medium coating layer formation step

In one embodiment, the method may further include forming a medium coating layer on an outer circumferential surface of the first intermediate material after preparation of the first intermediate material (S50).

The medium coating layer may be prepared by heat treatment of the first intermediate material in a hydrocarbon gas atmosphere.

In one embodiment, the medium coating layer may be formed by heat treatment of at least one of hydrocarbon gas and carbon black. For example, the hydrocarbon gas may include at least one of methane (CH₄), ethane (C₂H₆), propane (C₃H₈), butane (C₄H₁₀), and pentane (C₅H₁₂).

For example, heat treatment may be performed at 850°C to 970°C. Under this condition, the medium coating layer can be easily prepared. For example, heat treatment may be performed at 890°C to 910°C.

In one embodiment, heat treatment may be performed in a vacuum. Under this condition, the hydrocarbon gas can be evenly diffused in a chamber, thereby forming a uniform medium coating layer. For example, heat treatment may be performed in a vacuum of 10⁻¹ torr to 10⁻⁶ torr.

The medium coating layer may be the same as described above.

In one embodiment, the medium coating layer may have a pencil hardness of 2H to less than 4H, as measured in accordance with ISO 15184. Under this condition, the medium coating layer can very effectively relieve expansion of the anode material due to expansion of the nano-silicon particles to prevent fracture of the hard hollow core to secure long lifespan of the anode material. For example, the medium coating layer may have a pencil hardness of 2H to 3H.

In one embodiment, the medium coating layer may have a thickness of 10 nm to 150 nm. Under this condition, the medium coating layer can prevent damage to or fracture of the anode material even upon expansion of the nano-silicon particles.

In one embodiment, the medium coating layer may be present in an amount of 1 wt% to 30 wt% based on the total weight of the anode material. Within this range, the medium coating layer can secure electrical conductivity, can prevent cracking or fracture of the anode material upon expansion of the nano-silicon particles, and can minimize reduction in capacity to secure long lifespan. For example, the medium coating layer may be present in an amount of 1 wt% to 25 wt%, 1 wt% to 20 wt%, 1 wt% to 15 wt%, 1 wt% to 10 wt%, 1 wt% to 8 wt%, 2 wt% to 8 wt%, or 2 wt% to 5 wt%.

In one embodiment, the anode material may include the hollow core, the soft coating layer, the medium coating layer and the hard coating layers in a weight ratio of 1:0.1 to 5:0.1 to 5:0.1 to 15. Within this range of weight ratio, the anode material does not suffer from cracking and fracture of the hard coating layers (or the anode material) upon expansion of the nano-silicon particles and can minimize reduction in capacity to secure long lifespan. For example, the anode material may include the hollow core, the soft coating layer, the medium coating layer and the hard coating layers in a weight ratio of 1:0.1 to 4:0.1 to 4:0.5 to 15, 1:0.1 to 3:0.1 to 3:1 to 12, 1:0.3 to 2:0.3 to 2:1.5 to 10, 1:0.3 to 2:0.3 to 2:2 to 10, 1:0.5 to 2:0.5 to 2:2 to 8, or 1:0.5 to 2:0.5 to 1.5:2 to 6.

### Secondary battery including silicon carbon composite anode material

A further aspect of the present invention relates to a secondary battery including the silicon carbon composite anode material. In one embodiment, the secondary battery may include a cathode; an anode; and an electrolyte disposed between the cathode and the anode, wherein the anode includes the anode material.

The secondary battery may include a lithium secondary battery. In one embodiment, the lithium secondary battery may include a cathode including a cathode material; an anode spaced apart from the cathode and including the anode material; an electrolyte disposed between the anode and the cathode; and a separator disposed between the anode and the cathode to prevent electrical short of the anode and the cathode.

In one embodiment, each of the cathode and the anode may be manufactured by depositing a mixture comprising an active material, a conductive material and a binder on one surface of an electrode plate (electricity collector), followed by drying and pressing the mixture.

In one embodiment, each of a cathode plate and an anode plate may include at least one of copper, stainless steel, aluminum, nickel, and titanium.

In another example, the anode plate may be nickel foam, copper foam, a metal coated polyimide film, or a combination thereof.

In another example, the anode plate may include a copper foil, a carbon-coated copper foil, a copper foil having a surface roughness of 5 nm or more, a nickel foil, a stainless steel foil, a nickel-coated iron (Fe) foil, and a copper foil formed with holes having a size of 1 µm to 50 µm.

In one embodiment, the cathode material may include a composite oxide of a metal and lithium. The metal may include at least one of cobalt (Co), manganese (Mn), aluminum (Al), and nickel (Ni). For example, the metal may include at least one of lithium-nickel oxide, lithium-nickel-cobalt oxide, lithium-nickel-cobalt-manganese oxide, and lithium-nickel-cobalt-aluminum oxide.

In one embodiment, the conductive material may include at least one of natural graphite, artificial graphite, carbon black, acetylene black, Ketjen black, channel black, carbon fiber, metal fiber, carbon fluoride, aluminum, nickel powder, zinc oxide, potassium titanate, titanium oxide, and polyphenylene compounds.

In one embodiment, the binder may include polyvinylidene fluoride, polyvinyl alcohol, carboxymethylcellulose (CMC), starch, hydroxypropylcellulose, polyvinyl pyrrolidone, polytetrafluoroethylene, polyethylene, polypropylene, ethylene-propylene-diene monomer (EPDM), styrene rubber, and fluorine rubber.

In one embodiment, the separator may be a typical separator. For example, the separator may include at least one of polyester, polyethylene, polypropylene, and polytetrafluoroethylene (PTFE). The separator may be realized in the form of non-woven fabrics or woven fabrics. The separator is a porous structure having an average pore diameter of 0.01 µm to 10 µm and a thickness of 5 µm to 500 µm.

In one embodiment, the electrolyte may include a non-aqueous organic solvent and a lithium salt. For example, the non-aqueous organic solvent may include at least one of a carbonate solvent, an ester solvent, an ether solvent, and a ketone solvent. The carbonate solvent may include at least one of vinylene carbonate (VC), dimethyl carbonate (DMC), diethyl carbonate (DEC), dipropyl carbonate (DPC), fluoroethylene carbonate (FEC), methyl propyl carbonate (MPC), ethyl methyl carbonate (EMC), ethyl propyl carbonate (EPC), ethylene carbonate (EC), propylene carbonate (PC), and butylene carbonate (BC).

The ester solvent may include at least one of butyrolactone, decanolide, valerolactone, caprolactone, n-methyl acetate, n-ethyl acetate, and n-propyl acetate. The ether solvent may include dibutyl ether and the like. The ketone solvent may include poly(methyl vinyl ketone).

The lithium salt may act as a source of lithium ions in a battery. For example, the lithium salt may include at least one of LiPF₆, LiBF₄, LiSbF₆, LiAsF₆, LiClO₄, LiCF₃SO₃, LiN(CF₃SO₂)₂, LiN(C₂F₅SO₂)₂, LiAlO₄, and LiAlCl₄, without being limited thereto.

In one embodiment, the electrolyte may include at least one of vinylene carbonate, vinyl ethylene carbonate, monofluoroethylene carbonate, difluoroethylene carbonate, succinic anhydride, and 1,3-propane sultone.

In one embodiment, the lithium secondary battery may include a prismatic battery, a cylindrical battery, and a pouch-type battery.

Next, the present invention will be described in more detail with reference to examples. However, it should be understood that these examples are provided for illustration only and should not be construed in any way as limiting the invention.

### Examples and Comparative Example

### Example 1

(1) Preparation of nano-silicon slurry: A dispersion comprising 100 parts by weight of silicon powder, 0.1 parts by weight of a dispersant (stearic acid) and 900 parts by weight of a first solvent (ethanol) was prepared and ground by milling to prepare a nano-silicon slurry (viscosity: 4,320 cP at 25°C) comprising nano-silicon particles having an average particle diameter (d50) of 200 nm (a radius of 100 nm).
(2) Preparation of mixed slurry and dried powder: A mixed slurry including 97 wt% of the nano-silicon slurry and 3 wt% of a first hard coating material (carbon material having a pencil hardness of 4H to 6H in accordance with ISO 15184 and an average particle diameter (d50) of 0.05 µm to 0.5 µm, NanoMollisAdamas, Lemon Energy Co., Ltd.) was prepared. Then, dried powder was prepared by drying the mixed slurry using a rotational spray dryer at a disc RPM of 20,000 rpm to 30,000 rpm.
(3) Preparation of first mixture: A first mixture was prepared by mixing 94 wt% of the dried powder with 6 wt% of a second hard coating material (carbon material having a pencil hardness of 4.5 to 7.0H in accordance with ISO 15184 and an average particle diameter (d50) of 0.05 µm to 0.5 µm, NanoMollisAdamas, Lemon Energy Co., Ltd.). Next, sintered powder was prepared by sintering the first mixture at 900°C to 1,050°C in an inert (nitrogen) gas atmosphere.
(4) Preparation of second mixture: A second mixture including 60 wt% of the sintered powder, 25 wt% of a third hard coating material (carbon material having a pencil hardness of 4.5 to 6.5H in accordance with ISO 15184 and an average particle diameter (d50) of 0.05 µm to 0.5 µm, NanoMollisAdamas, Lemon Energy Co., Ltd.) and 15 wt% of a soft coating material (including pitch having an average particle diameter (d50) of 0.03 µm to 5 µm) was prepared. The second mixture included the first hard coating material, the second hard coating material and the third hard coating material in a weight ratio of 1:1.5 to 3:5 to 8.
(5) Preparation of first intermediate material and anode material: A first intermediate material was prepared by sintering the second mixture in an inert gas (nitrogen) atmosphere at 850°C to 1,050°C. Then, an anode material was prepared by crushing and classifying the first intermediate material.

The anode material included 1 wt% to 40 wt% of a hollow core (thickness: 20 nm to 30 nm, pencil hardness: 4H in accordance with ISO 15184, density: 1.8 g/cm³ to 2.1 g/cm³) having a hollow portion (average diameter: 3 µm) therein; 1 wt% to 70 wt% of first and second hard coating layers sequentially formed around the hollow core to be spaced apart from each other in an outward direction; 25 wt% to 80 wt% of nano-silicon particles packed in the hollow portion and a separation space formed between the hard coating layers; and 1 wt% to 30 wt% of a soft coating layer (thickness: 10 nm to 30 nm, pencil hardness: B in accordance with ISO 15184, density: 1.3 g/cm³) formed on an outer circumferential surface of the second hard coating layer.

The anode material included the hollow core, the soft coating layer and the hard coating layers (sum of the first and second hard coating layers) in a weight ratio of 1:0.5 to 2:3 to 5.

Separation distances between the outer circumferential surface of the hollow core of the anode material and the first hard coating layer and between the first hard coating layer and the second hard coating layer ranged from 50 nm to 200 nm.

The nano-silicon particles included first nano-silicon particles having an average particle diameter (d50) of 50 nm (a radius of 25 nm) and second nano-silicon particles having an average particle diameter (d50) of 100 nm (a radius of 50 nm). The nano-silicon particles were packed in a packing density of 25% to 70%.

The first hard coating layer had a thickness of 10 nm to 30 nm and a pencil hardness of 4.5H to 5H in accordance with ISO 15184 and a density of 1.8 g/cm³ to 2.3 g/cm³, and the second hard coating layer had a thickness of 10 nm to 30 nm, a pencil hardness of 5.5H to 6.5H in accordance with ISO 15184 and a density of 2.0 g/cm³ to 2.6 g/cm³.

### Example 2

The sintered powder of Example 1 was mixed with a third hard coating material (carbon material having a pencil hardness of 4.5H to 6.5H in accordance with ISO 15184 and an average particle diameter (d50) of 0.05 µm to 0.5 µm, NanoMollisAdamas, Lemon Energy Co., Ltd.) to prepare a mixture, which in turn was pressed at a pressure of 20 atm in one direction to prepare a pressed product. Then, a sintered product was prepared by sintering the pressed product at 900°C to 1,050°C. Next, a second mixture including the sintered product and a soft coating material (including pitch having an average particle diameter (d50) of 0.03 µm to 5 µm) was prepared. The second mixture included 60 wt% of the sintered powder, 25 wt% of the third hard coating material and 15 wt% of the soft coating material. In Example 2, the second mixture included the first hard coating material, the second hard coating material and the third hard coating material in a weight ratio of 1:1.5 to 3:6 to 9.

Next, a first intermediate material was prepared by sintering the second mixture in an inert gas (nitrogen) atmosphere at 850°C to 1,050°C. Then, an anode material was prepared by crushing and classifying the first intermediate material.

The anode material included 1 wt% to 40 wt% of a hollow core (thickness: 20 nm to 30 nm, pencil hardness: 4.5H in accordance with ISO 15184, density: 1.8 g/cm³ to 2.1 g/cm³) having a hollow portion (average diameter: 3 µm) therein; 1 wt% to 70 wt% of first and second hard coating layers sequentially formed around the hollow core to be spaced apart from each other in an outward direction; 25 wt% to 80 wt% of nano-silicon particles packed in the hollow portion and a separation space formed between the hard coating layers; and 1 wt% to 30 wt% of a soft coating layer (thickness: 10 nm to 30 nm, pencil hardness: B in accordance with ISO 15184, density: 1.3 g/cm³) formed on an outer circumferential surface of the second hard coating layer.

The anode material included the hollow core, the soft coating layer and the hard coating layers (sum of the first and second hard coating layers) in a weight ratio of 1:0.5 to 2:3 to 5.

Separation distances between the outer circumferential surface of the hollow core of the anode material and the first hard coating layer and between the first hard coating layer and the second hard coating layer ranged from 100 nm to 250 nm.

The nano-silicon particles included first nano-silicon particles having an average particle diameter (d50) of 100 nm (a radius of 50 nm) and second nano-silicon particles having an average particle diameter (d50) of 150 nm (a radius of 75 nm). The nano-silicon particles were packed in a packing density of 30% to 70%.

The first hard coating layer had a thickness of 10 nm to 30 nm, a pencil hardness of 5.5H to 6H in accordance with ISO 15184 and a density of 1.8 g/cm³ to 2.3 g/cm³, and the second hard coating layer had a thickness of 10 nm to 30 nm, a pencil hardness of 6.5H to 7H in accordance with ISO 15184 and a density of 2.0 g/cm³ to 2.6 g/cm³.

### Example 3

A second mixture including the sintered powder of Example 1 and a soft coating material (including pitch having an average particle diameter (d50) of 0.03 µm to 5 µm) was prepared. The second mixture included 80 wt% of the sintered powder and 20 wt% of the soft coating material, and included the first hard coating material and the second hard coating material in a weight ratio of 1:2 to 1:6.

Next, a first intermediate material was prepared by sintering the second mixture in an inert gas (nitrogen) atmosphere at 850°C to 1,050°C. Then, an anode material was prepared by crushing and classifying the first intermediate material.

The anode material included 1 wt% to 40 wt% of a hollow core (thickness: 20 nm to 30 nm, pencil hardness: 4H in accordance with ISO 15184, density: 1.8 g/cm³ to 2.1 g/cm³) having a hollow portion (average diameter: 3 µm) therein; 1 wt% to 70 wt% of first and second hard coating layers sequentially formed around the hollow core to be spaced apart from each other in an outward direction; 25 wt% to 80 wt% of nano-silicon particles packed in the hollow portion and a separation space formed between the hard coating layers; and 1 wt% to 30 wt% of a soft coating layer (thickness: 10 nm to 30 nm, pencil hardness: B in accordance with ISO 15184, density: 1.3 g/cm³) formed on an outer circumferential surface of the second hard coating layer.

The anode material included the hollow core, the soft coating layer and the hard coating layers (sum of the first and second hard coating layers) in a weight ratio of 1:1 to 2:3 to 5.

Separation distances between the outer circumferential surface of the hollow core of the anode material and the first hard coating layer and between the first hard coating layer and the second hard coating layer ranged from 50 nm to 150 nm.

The nano-silicon particles included first nano-silicon particles having an average particle diameter (d50) of 20 nm (a radius of 10 nm) and second nano-silicon particles having an average particle diameter (d50) of 50 nm (a radius of 25 nm). The nano-silicon particles were packed in a packing density of 30% to 70%.

The first hard coating layer had a thickness of 10 nm to 30 nm, a pencil hardness of 4.5H to 5H in accordance with ISO 15184 and a density of 1.8 g/cm³ to 2.3 g/cm³, and the second hard coating layer had a thickness of 10 nm to 30 nm, a pencil hardness of 5.5H to 6H in accordance with ISO 15184 and a density of 1.8 g/cm³ to 2.5 g/cm³.

### Example 4

A sintered product was prepared by pressing the first mixture of Example 1 at a pressure of 10 atm to 30 atm in one direction to prepare a pressed product, followed by sintering the pressed product at 900°C to 1,050°C.

Next, a second mixture including the sintered product of Example 1 and a soft coating material (including pitch having an average particle diameter (d50) of 0.03 µm to 5 µm) was prepared. The second mixture included 80 wt% of the sintered powder and 20 wt% of the soft coating material, and included the first hard coating material and the second hard coating material in a weight ratio of 1:2 to 1:6.

Next, a first intermediate material was prepared by sintering the second mixture in an inert gas (nitrogen) atmosphere at 850°C to 1,050°C. Then, an anode material was prepared by crushing and classifying the first intermediate material.

The anode material included 1 wt% to 40 wt% of a hollow core (thickness: 20 nm to 30 nm, pencil hardness: 4H in accordance with ISO 15184, density: 1.8 g/cm³ to 2.1 g/cm³) having a hollow portion (average diameter: 3 µm) therein; 1 wt% to 70 wt% of first and second hard coating layers sequentially formed around the hollow core to be spaced apart from each other in an outward direction; 25 wt% to 80 wt% of nano-silicon particles packed in the hollow portion and a separation space formed between the hard coating layers; and 1 wt% to 30 wt% of a soft coating layer (thickness: 10 nm to 30 nm, pencil hardness: B in accordance with ISO 15184, density: 1.2 g/cm³) formed on an outer circumferential surface of the second hard coating layer.

The anode material included the hollow core, the soft coating layer and the hard coating layers (sum of the first and second hard coating layers) in a weight ratio of 1:1 to 2:2 to 4.

Separation distances between the outer circumferential surface of the hollow core of the anode material and the first hard coating layer and between the first hard coating layer and the second hard coating layer ranged from 50 nm to 200 nm.

The nano-silicon particles included first nano-silicon particles having an average particle diameter (d50) of 50 nm (a radius of 25 nm) and second nano-silicon particles having an average particle diameter (d50) of 100 nm (a radius of 50 nm). The nano-silicon particles were packed in a packing density of 30% to 70%.

The first hard coating layer had a thickness of 10 nm to 30 nm, a pencil hardness of 4.5H to 5H in accordance with ISO 15184 and a density of 1.8 g/cm³ to 2.3 g/cm³, and the second hard coating layer had a thickness of 10 nm to 30 nm, a pencil hardness of 5.5H to 6H in accordance with ISO 15184 and a density of 1.8 g/cm³ to 2.5 g/cm³.

### Example 5

An anode material was prepared by placing the first intermediate material of Example 1 in the chamber, followed by heat treatment at 900°C while supplying a hydrocarbon gas (CH₄) at a flow rate of 0.2 L/cc to the chamber in a vacuum of 10⁻² torr to 10⁻⁶ torr for 20 min to form a medium coating layer on an outer circumferential surface of the soft coating layer of the first intermediate material through pyrolysis of the hydrocarbon gas.

The anode material included 1 wt% to 40 wt% of a hollow core (thickness: 20 nm to 30 nm, pencil hardness: 4H in accordance with ISO 15184, density: 1.8 g/cm³ to 2.1 g/cm³) having a hollow portion (average diameter: 4 µm) therein; 1 wt% to 70 wt% of first and second hard coating layers sequentially formed around the hollow core to be spaced apart from each other in an outward direction; 25 wt% to 80 wt% of nano-silicon particles packed in the hollow portion and a separation space formed between the hard coating layers; 1 wt% to 30 wt% of a soft coating layer (thickness: 10 nm to 30 nm, pencil hardness: B in accordance with ISO 15184, density: 1.3 g/cm³) formed on an outer circumferential surface of the second hard coating layer; and 1 wt% to 30 wt% of a medium coating layer (thickness: 10 nm to 20 nm, pencil hardness: 2H in accordance with ISO 15184, density: 1.6 g/cm³ to 1.7 g/cm³) formed on an outer circumferential surface of the soft coating layer.

The anode material included the hollow core, the soft coating layer, the medium coating layer and the hard coating layers (sum of the first and second hard coating layers) in a weight ratio of 1: 1 to 2:0.5 to 2:3 to 5.

Separation distances between the outer circumferential surface of the hollow core of the anode material and the first hard coating layer and between the first hard coating layer and the second hard coating layer ranged from 50 nm to 200 nm.

The nano-silicon particles included first nano-silicon particles having an average particle diameter (d50) of 100 nm (a radius of 50 nm) and second nano-silicon particles having an average particle diameter (d50) of 150 nm (a radius of 75 nm). The nano-silicon particles were packed in a packing density of 30% to 70%.

The first hard coating layer had a thickness of 10 nm to 30 nm, a pencil hardness of 5.5H to 6H in accordance with ISO 15184 and a density of 1.8 g/cm³ to 2.3 g/cm³, and the second hard coating layer had a thickness of 10 nm to 30 nm, a pencil hardness of 6.5H to 7H in accordance with ISO 15184 and a density of 2.0 g/cm³ to 2.6 g/cm³.

### Comparative Example 1

Sintered powder was prepared by sintering only the dried powder prepared in Example 1 at 900°C to 1,050°C in an inert gas atmosphere. Thereafter, an intermediate material (anode material) was prepared by mixing the sintered powder with a soft coating material (including pitch having an average particle diameter (d50) of 3 µm to 5 µm), followed by sintering the mixture at 850°C to 975°C to form a first coating layer (soft coating layer), and was crushed and classified.

The anode material included a core including nano-silicon particles and a first coating layer (soft coating layer having a thickness: 10 nm to 20 nm, a pencil hardness of B in accordance with ISO 15184, and a density of 1.5 g/cm³) on an outer circumferential surface of the core.

The anode material included 25 wt% to 80 wt% of the nano-silicon particles and 20 wt% to 75 wt% of the first coating layer.

### Experimental Example

(1) Measurement of diffraction angle (2θ) at (111) and (220) planes, grain size at (111) plane, oxidation rate, and specific surface area of nano-silicon particles: The anode materials prepared in Examples and Comparative Example were measured as to the diffraction angles (2θ) at the (111) and (220) planes, grain size at the (111) plane, oxidation rate, and specific surface area of the nano-silicon particles.

Specifically, the diffraction angles (2θ) at the (111) and (220) planes of the nano-silicon particles were measured as to the nano-silicon particles of the anode materials of Examples and Comparative Example by a measurement instrument (Empyrean, Malvern Panalytical Co., Ltd.) based on an X-ray diffraction (XRD) spectrum using CuKα-rays at a wavelength of 1.54 Å.

In addition, the grain size of the nano-silicon particles prepared in Examples and Comparative Example was calculated according to a gain size equation (Scherrer Equation for K=9) based on the FWHM (full width at half maximum) values at the (111) plane in X-ray diffraction analysis using CuKα-rays. The oxidation rate of the nano-silicon particles was calculated based on the content of oxygen measured using a measurement instrument (ONH 836 Series, LECO) and the specific surface area thereof was measured using a BET meter (Micromeritics, Tristar II 3920). Table 1 shows measurement results.

**[Table 1]**

| Item | Grain size ( nm) at (111) | Oxygen content (wt%) | Specific surface area (m²/g) |
|---|---|---|---|
| Example 1 | 15.9 | 6.5 | 4.2 |
| Example 2 | 16.1 | 6.6 | 4.3 |
| Example 3 | 16.1 | 6.2 | 4.8 |
| Example 4 | 16.5 | 6.4 | 5.4 |
| Example 5 | 16.5 | 6.2 | 5.6 |
| Comparative Example 1 | 15.7 | 9.6 | 4.9 |

Referring to Table 1, it could be seen that the anode materials of Examples 1 to 5 had lower oxidation rates to have better properties in terms of high output and long lifespan than the anode material of Comparative Example 1.

The nano-silicon particles of the anode materials of Example 1 to 5 had effective peaks at a diffraction angle (2θ) of about 27.5° to 28.5°, 47° to 48°, 55° to 56°, 68° to 69°, 75° to 77°, and 88° to 90° in the X-ray diffraction spectrum, in which the effective peaks represent the (111), (220), (311), (400), (331) and (442) planes.

Further, the nano-silicon particles of the anode materials of Examples 1 to 5 had the highest effective peak at a diffraction angle (2θ) of 26° to 30° at the (111) plane in the X-ray diffraction (XRD) spectrum, in which the diffraction angle (2θ) of 26° to 30° corresponds to the (111) plane.

In addition, the nano-silicon particles of the anode materials of Examples 1 to 5 had higher peak intensity at a diffraction angle 2θ of 26° to 30° and at a diffraction angle of 47° to 50° in the X-ray diffraction (XRD) spectrum than the nano-silicon particles of the anode material of Comparative Example 1.

Further, it could be seen that the peak intensity of silicon was further enhanced when the nano-silicon particles were formed with the first hollow core and the hard coating layers, followed by forming the soft coating layer and the medium coating layer as in Example 5.

On the other hand, for the nano-silicon particles, it is desirable to have a smaller grain size in order to allow reversible physical expansion and contraction thereof upon intercalation and deintercalation of lithium ions (a smaller grain size of the silicon particles results in a greater half-width of the main peak in the Si [111] orientation in the 2θ data of XRD and a smaller grain size calculated according to the Scherrer equation for K=9). However, a smaller grain size of the silicon particles can cause increase in oxidation rate of silicon through increase in grinding time of a silicon material. Therefore, it is important to control the oxidation rate of the nano-silicon particles through determination of the size of the silicon particles and production of the silicon particles having a suitable grain size.

That is, according to the present invention, the average particle diameter (d50) of the nano-silicon particles is set to satisfy the oxidation rate of a silicon anode. In this case, expansion/contraction of the nano-silicon particles becomes reversible. Accordingly, it is possible to secure stable electrochemical characteristics in evaluation of lithium ion secondary batteries using the anode materials of Examples.

The nano-silicon particles may have an FWHM value of the X-ray diffraction angle (2θ) of 0.40° to 0.80°, preferably 0.52° to 0.68°, or 0.59° to 0.71°, at the (111) plane in X-ray diffraction analysis using CuKα-rays.

When the FWHM value of the nano-silicon particles satisfies the above range after sintering, fracture of the silicon particles can be significantly reduced upon charging/discharging by sufficiently suppressing new exposed surfaces of the nano-silicon particles. However, the anode materials of Examples allowed efficient charging/discharging, thereby significantly improving lifespan of the silicon anodes. Further, it can be seen that a high capacity silicon anode, that is, an anode material for lithium ion secondary batteries, can be produced using the nano-silicon particles such that capacity of a silicon/carbon composite exceeds the range of 1,300 mAh/g to 1,400 mAh/g.

(2) Anode material XRD peak analysis: Among the anode materials of Examples and Comparative Example, the second hard coating layer and the soft coating layer of the anode material of Example 1 were analyzed based on XRD peaks. FIG. 4 shows an analysis result.

FIG. 4 is an XRD graph depicting an XRD analysis result of the second hard coating layer and the soft coating layer of the anode material of Example 1. Referring to FIG. 4, in the XRD graph, the second hard coating layer of Example 1 had a primary peak at 2θ = 25~26° at the C(002) plane, whereas the soft hard coating layer of Example 1 had a primary peak near at 2θ = 23° substantially indicating graphite. Accordingly, it could be seen that the second hard coating layer had better crystallinity than the soft coating layer.

Referring again to FIG. 4, the secondary peak appeared near at 2θ = 43° at the C(100) plane and the second hard coating layer had higher crystallinity than the soft coating layer. Accordingly, it could be seen that the second hard coating layer with high crystallinity had higher hardness, higher rigidity, and better electrical conductivity of carbon than the soft coating layer.

### (3) Electrochemical evaluation (1)

(3-1) Preparation of lithium ion battery (half-coin type cell): CR2032 half-coin cells were prepared using the anode materials of Examples and Comparative Example. Specifically, a mixture was prepared by mixing 96.99 wt% of the anode material of each of Examples and Comparative Example, 0.11 wt% of a conductive material (Oscial, Tuball, graphene carbon nanotube), 1.65 wt% of CMC (carboxy methyl cellulose), and 1.25 wt% of styrene butadiene rubber (SBR). Next, an anode slurry having a capacity of about 450 mAh/g was prepared by mixing 10.1 wt% of the prepared mixture with 89.9 wt% of commercially available natural graphite having a capacity of 364 mAh/g. Then, an anode was prepared by coating the prepared slurry onto one surface of an anode collector, followed by drying and pressing. The anode had a loading quantity of 6.5±0.5m g/cm² and an electrode density of 1.60 g/cc to 1.65 g/cc.

A CR2032 half-coin cell was prepared using a lithium cathode (thickness: 300 µm, MTI), an electrolyte, and a separator (including polypropylene and polyethylene) by a typical method. The electrolyte was prepared by dissolving 1M LiPF₆ in a solvent mixture of ethyl methyl carbonate (EMC) and ethylene carbonate (EC) (EMC:EC = 5:5 in volume ratio), followed by adding vinylene carbonate (VC) and fluoroethylene carbonate (FEC) to the solvent mixture (94.5 wt% of the solvent mixture, 0.5 wt% of vinylene carbonate and 5 wt% of fluoroethylene carbonate).

(3-2) Evaluation of charge/discharge characteristics: The half-coin cells prepared in (3-1) were subjected to aging at room temperature (25°C) for 20 hours, followed by electrochemical evaluation. For the anode materials, a reference capacity was set to 450 mAh/g and a measurement temperature was set to 45°C. A single cycle of a precharging process was performed in the operation voltage range of 0.005V to 1.5V, in which the charge/discharge current was 0.1C for one cycle. Then, after two cycles at a capacity of 0.2C, 50 cycles of lifespan evaluation were performed by applying a current of 0.5C upon charging/discharging at 0.2C in two cycles. Here, charge cut-off current was set to 0.005C and discharge cut-off voltage was set to 1.0V.

Lifespan (%) of the secondary batteries was evaluated through electrochemical evaluation of capacity (mAh/g) of the anodes of Examples and Comparative Example, and capacity (mAh/g), charge/discharge efficiency (%) and capacity retention rate of anode plates. Table 2 shows evaluation results.

(3-3) Evaluation of expansion characteristics: An expansion rate of the anode material upon charging/discharging was evaluated with respect to each of the half-coin cells of Examples and Comparative Example prepared in (3-1). Evaluation of the expansion rate was performed with reference to an initial anode thickness of the half-coin cell. The half-coin cell was charged with a current of 0.5C after 50 cycles of charging/discharging at a current of 0.5C. Next, the thickness of the anode and the thickness increase rate with reference to the initial anode thickness were measured. Table 4 shows a measurement result.

The thickness of the anode was measured using a measuring device (micrometer) after completion of the cycles, followed by dissembling the half-coin cell and completely removing foreign matter including a salt therefrom using a solvent (DMC).

**[Table 2]**

| Item | Capacit y (mAh/g ) | Capacity of anode plate (mAh/g) | Charge/dischar ge efficiency (%) | Lifespan (%) @50cycle | Expansion rate (%) @50cycle |
|---|---|---|---|---|---|
| Example 1 | 1750 | 724 | 88.9 | 89.2 | 41.2 |
| Example 2 | 1780 | 717 | 89.2 | 89.5 | 41.3 |
| Example 3 | 1715 | 705 | 88.7 | 89.1 | 42.5 |
| Example 4 | 1706 | 696 | 90.4 | 87.8 | 42.6 |
| Example 5 | 1825 | 715 | 91.2 | 93.1 | 39.2 |
| Comparative Example 1 | 1660 | 684 | 85.6 | 74.3 | 57.8 |

Referring to Table 2, it could be seen that the anode materials of Examples 1 to 5 had better properties in terms of charge/discharge efficiency and long lifespan than Comparative Example 1. In addition, it could be seen that the anode materials of Examples 1 to 5 had a lower volume change rate upon charging/discharging than Comparative Example 1, thereby preventing cracking and fracture upon intercalation/deintercalation of lithium ions and securing long lifespan through minimization in capacity reduction.

### (4) Electrochemical evaluation (2)

(4-1) Preparation of lithium ion battery (1.0 Ah pouch type full cell): Pouch type full cells were prepared using the anode materials of Examples and Comparative Example. Specifically, a mixture was prepared by mixing 96.99 wt% of the anode material of each of Examples and Comparative Example, 0.11 wt% of a conductive material (Oscial, Tuball, graphene carbon nanotube), 1.65 wt% of CMC (carboxy methyl cellulose), and 1.25 wt% of styrene butadiene rubbers (SBR). Next, an anode slurry having a capacity of about 550 mAh/g was prepared by mixing 10.1 wt% of the prepared mixture with 89.9 wt% of commercially available natural graphite having a capacity of 364 mAh/g. Then, an anode was prepared by coating the prepared slurry onto one surface of an anode collector plate, followed by drying and pressing. The anode had a loading quantity of 6.5±0.5 mg/cm² and an electrode density of 1.55 g/cc to 1.60 g/cc.

Next, pouch cells having a capacity of 1.0 Ah were prepared using a cathode (NCM811), an electrolyte, and a separator (including polypropylene and polyethylene) by a typical method.

The electrolyte was prepared by dissolving 1M LiPF₆ in a solvent mixture of ethyl methyl carbonate (EMC) and ethylene carbonate (EC) (EMC:EC = 5:5 in volume ratio), followed by adding vinylene carbonate (VC) and fluoroethylene carbonate (FEC) to the solvent mixture (96.5 wt% of the solvent mixture, 0.5 wt% of vinylene carbonate and 3 wt% of fluoroethylene carbonate).

(4-2) Evaluation of charge/discharge characteristics: The full cells prepared in (4-1) were subjected to aging at room temperature (25°C) for 20 hours, followed by electrochemical evaluation at room temperature. Specifically, for each of the full cells prepared in Examples and Comparative Example, a single cycle of a precharging process of 0.1C charge/0.1C discharge was performed in the operation voltage range of 2.75V to 4.25V. In one cycle, the charge current was set to 0.1C and the cut-off current was set to 0.005C. Then, after two cycles with reference to a standard process of 0.2C charge, 0.01C cut-off/0.1C discharge, 800 cycles of lifespan evaluation (capacity retention rate) were performed under conditions of 1.0C/4.2V cutoff by applying a charge current of 0.5C/0.02C cut-off upon charging with reference to 0.2C discharge capacity in two cycles. Table 3 shows evaluation results.

**[Table 3]**

| Item | One cycle charge/discharge efficiency (0.1C/0.1C) | Capacity retention rate @800cycle |
|---|---|---|
| Example 1 | 86.3 | 95.6 |
| Example 2 | 86.2 | 95.1 |
| Example 3 | 85.9 | 94.8 |
| Example 4 | 86.3 | 94.9 |
| Example 5 | 86.6 | 96.5 |
| Comparative Example 1 | 85.3 | 38.6 |

From the result of Table 3, it could be seen that the full cells of Examples 1 to 5 had better properties in terms of charge/discharge efficiency and long lifespan characteristics than that of Comparative Example 1.

(4-3) Impedance evaluation: AC impedance spectrum of each of the full cells of Examples and Comparative Example prepared in (4-1) was measured.

Typical internal reactions in lithium ion batteries include passivation, charge transfer and diffusion reactions. These reactions have different time constants and appear in different frequency regions of an impedance spectrum.

Passivation refers to formation of a passivation layer by reduction of the cathode and the electrolyte in the lithium ion battery and is represented by a parallel connection of a resistor and a capacitor, and a small semicircle appears in a high frequency region of the impedance spectrum.

In addition, a large semicircle appearing in the impedance spectrum denotes a charge transfer phenomenon and is represented by a parallel connection of charge transfer resistance (Rct) and double layer capacitance (Cdl). The large semicircle represents electron transfer reaction across an interface between two electrodes (cathode and anode) and the electrolyte.

In order to obtain AC impedance spectrum of the full cells (1.0Ah) of Examples and Comparative Example, BPS 1000FL was used. Impedance measurement was performed at a frequency of 10 mHz to 1 kHz. Curve fitting using an equivalent circuit including an Rct and Cdl parallel circuit was performed using Zview.

Impedance of each of the full cells (1.0Ah) of Examples and Comparative Example was measured with reference to a capacity in the range of 3.0 V to 4.2 V and 100% SOC (state of charge) after operation of 10 cycles to secure stability of the cells, and measurement results are shown in Table 4.

**[Table 4]**

| Item | Rct (mohm) (@SOC 100%) |
|---|---|
| Example 1 | 36.5 |
| Example 2 | 35.3 |
| Example 3 | 40.5 |
| Example 4 | 39.8 |
| Example 5 | 34.7 |
| Comparative Example 1 | 55.6 |

From Table 4, it could be seen that the anode materials of Examples 1 to 5 had lower charge transfer resistance (Rct) than the anode material of Comparative Example 1.

(5) Evaluation of expansion characteristics of single-electrode plate: An expansion rate upon charging/discharging was evaluated with respect to the anode materials of Examples and Comparative Example. Specifically, cathode plates were fabricated using NCM811 and anode plates were fabricated using the anode materials prepared in Examples 1 to 5 and Comparative Example 1 under conditions of current density of 3.2 mA/cm² and rolling density of 1.55 g/cc. Then, single-electrode plate cells with an anode and a cathode facing each other were fabricated using these plates.

Next, the single-electrode plate cell was subjected to a precharging process and a standard process by 0.1C/0.1C charge/discharge once and 0.25C/0.25C charge/discharge once. Thereafter, 100 cycles of charge/discharge were performed by repeating a cycle of charging at 0.5C and 2.6V cutoff and discharging at 0.5C and 4.2V cutoff.

Next, for the single-electrode plate cells of Examples 1 to 5 and Comparative Example 1, an initial thickness of the anode and thicknesses of the anode after 1 cycle, 25 cycles and 100 cycles were measured and thickness change ratios after 1 cycle, 25 cycles and 100 cycles were measured with reference to the initial anode thickness. In addition, charge/discharge efficiency (%) of each of the single-electrode plate cells upon operation of 1 cycle was measured and Table 5 shows measurement results.

**[Table 5]**

| Item | 1 cycle charge/discharge efficiency (%) (0.1C/0.1C) | Thickness change ratio after 1 cycle | Thickness change ratio after 25 cycles | Thickness change ratio after 100 cycles |
|---|---|---|---|---|
| Example 1 | 86.20% | 14.50% | 23.80% | 34.50% |
| Example 2 | 85.70% | 13.10% | 24.10% | 34.20% |
| Example 3 | 85.10% | 14.20% | 23.50% | 36.90% |
| Example 4 | 86.30% | 13.80% | 24.70% | 32.60% |
| Example 5 | 85.60% | 13.20% | 20.90% | 29.30% |
| Comparative Example 1 | 84.80% | 15.20% | 35.50% | 51.70% |

Referring to Table 5, it could be seen that Examples 1 to 5 had lower thickness (volume) change rates than Comparative Example 1 upon charge/discharge of the single-electrode plate cell.

Although the present invention has been described with reference to some example embodiments, it should be understood by those skilled in the art that these embodiments are given by way of illustration only, and that various modifications, variations and alterations can be made without departing from the spirit and scope of the invention. Therefore, the embodiments should not be construed as limiting the technical spirit of the present invention, but should be construed as illustrating the technical spirit of the present invention. The scope of the invention should be interpreted according to the following appended claims as covering all modifications or variations derived from the appended claims and equivalents thereto.

## Claims

1. An anode material comprising:
a hollow core having a hollow portion therein;
one or more hard coating layers spaced apart from each other in an outward direction from the hollow core;
nano-silicon particles packed in the hollow portion and in a separation space defined between the hard coating layers; and
a soft coating layer formed on an outer circumferential surface of an outermost hard coating layer,
wherein each of the hollow core and the hard coating layers has a higher hardness than the soft coating layer, and the anode material has a hardness sequentially increasing from the hollow core to the outermost hard coating layer.

2. The anode material according to claim 1, wherein the hollow core has a pencil hardness of 4H to 6H, each of the hard coating layers has a pencil hardness of greater than 4H to 7H, and the soft coating layer has a pencil hardness of less than 3H, as measured in accordance with ISO 15184.

3. The anode material according to claim 1, wherein:
the hollow core has a thickness of 5 nm to 150 nm and a density of 1.8 g/cm³ to 2.5 g/cm³,
each of the hard coating layers has a thickness of 5 nm to 100 nm and a density of 1.8 g/cm³ to 2.8 g/cm³; and
the soft coating layer has a thickness of 10 nm to 150 nm and a density of 1.5 g/cm³ or less.

4. The anode material according to claim 1, wherein:
the anode material has an average particle diameter (d50) of 5µm to 30 µm;
the hollow portion has an average diameter of 3 µm to 10 µm; and
the nano-silicon particles have an average particle diameter (d50) of 50 nm to 500 nm.

5. The anode material according to claim 1, wherein the anode material comprises the hollow core, the soft coating layer and the hard coating layers in a weight ratio of 1:0.1 to 5:0.1 to 15.

6. The anode material according to claim 1, wherein the nano-silicon particles has an effective peak at a diffraction angle (2θ) in the range of 26° to 30°, 47° to 50°, 53° to 58°, 68° to 72°, 74° to 78°, and/or 88° to 90° in an X-ray diffraction (XRD) spectrum.

7. The anode material according to claim 1, further comprising:
a medium coating layer formed on an outer circumferential surface of the soft coating layer.

8. A method of preparing an anode material, comprising:
drying a mixed slurry comprising a nano-silicon slurry and a first hard coating material to prepare dried powder;
preparing a first mixture comprising the dried powder and a second hard coating material;
sintering the first mixture to prepare sintered powder;
preparing a second mixture comprising the sintered powder and a soft coating material; and
sintering the second mixture to prepare a first intermediate material,
wherein the first intermediate material comprises: a hollow core having a hollow portion therein; one or more hard coating layers spaced apart from each other in an outward direction from the hollow core; nano-silicon particles packed in the hollow portion and in a separation space defined between the hard coating layers; and a soft coating layer formed on an outer circumferential surface of an outermost hard coating layer,
wherein each of the hollow core and the hard coating layers has a higher hardness than the soft coating layer, and
wherein the anode material has a hardness sequentially increasing from the hollow core to the outermost hard coating layer.

9. The method according to claim 8, wherein the nano-silicon slurry is prepared by dispersing silicon powder and a dispersant in a first solvent to prepare a dispersion, followed by grinding the dispersion, the first solvent comprising at least one of water, ethanol, isopropyl alcohol, and potassium hydroxide (KOH).

10. The method according to claim 8, wherein the hollow core has a pencil hardness of 4H to 6H, each of the hard coating layers has a pencil hardness of greater than 4H to 7H, and the soft coating layer has a pencil hardness of less than 3H, as measured in accordance with ISO 15184.

11. The method according to claim 8, wherein the sintered powder is prepared by sintering the first mixture at 900°C to 1,050°C and the first intermediate material is prepared by sintering the second mixture at 850°C to 1,050°C.

12. The method according to claim 8, wherein the first hard coating material and the second hard coating material are present in a weight ratio of 1:1.5 to 1:6.

13. The method according to claim 12, wherein the step of preparing the second mixture comprises:
mixing the first mixture with the third hard coating material, followed by sintering at 900°C to 1,050°C to prepare a sintered product; and
mixing the sintered product with a soft coating material to prepare the second mixture.

14. The method according to claim 8, further comprising:
forming a medium coating layer on an outer circumferential surface of the first intermediate material after preparation of the first intermediate material,
wherein the medium coating layer is formed by heat treatment of the first intermediate material in a hydrocarbon gas atmosphere.

15. A secondary battery comprising:
a cathode;
an anode; and
an electrolyte disposed between the cathode and the anode,
wherein the anode comprises the anode material according to claim 1.
